# EUROPÄISCHE PATENTSCHRIFT

(11) **EP 3 566 410 B1**
(45) Veröffentlichungstag und Bekanntmachung des Hinweises auf die Patenterteilung: **13.05.2020**
(21) Anmeldenummer: 18700084.9
(22) Anmeldetag: 02.01.2018
(51) Int. Cl.: H04L 29/06, H04W 92/00

(54) **VERFAHREN UND SYSTEM ZUR LATENZARMEN AUDIOÜBERTRAGUNG IN EINEM MOBILFUNK-NETZWERK**
METHOD AND SYSTEM FOR A LOW-LATENCY AUDIO TRANSMISSION IN A MOBILE COMMUNICATIONS NETWORK
PROCÉDÉ ET SYSTÈME DE TRANSMISSION AUDIO À FAIBLE LATENCE DANS UN RÉSEAU MOBILE

(30) Priorität: 04.01.2017 DE 102017100076
(43) Veröffentlichungstag der Anmeldung: 13.11.2019
(73) Patentinhaber: Sennheiser electronic GmbH & Co. KG, 30900 Wedemark (DE)
(72) Erfinder: HAUSTEIN, Thomas, 14469 Potsdam (DE); WIERUCH, Dennis, 10587 Berlin (DE); WIRTH, Thomas, 12163 Berlin (DE); KRÜGER, Udo, 12161 Berlin (DE); GEORGI, Sebastian, 30853 Langenhangen (DE); WATERMANN, Jan, 30161 Hannover (DE)
(74) Vertreter: Eisenführ Speiser
(86) Internationale Anmeldenummer: PCT/EP2018/050005
(87) Internationale Veröffentlichungsnummer: WO 2018/127466

(56) Entgegenhaltungen:
- EP-A1- 3 021 628
- DE-A1-102015 210 873

## Beschreibung

Die vorliegende Erfindung betrifft ein Verfahren und ein System zur Audioübertragung mit sehr geringer Latenzzeit über ein Mobilfunk-Netzwerk, z.B. ein LTE-Netzwerk.

### Hintergrund

Für die Audioübertragung mittels drahtloser Mikrofonsysteme ist eine möglichst geringe Verzögerungszeit des akustischen Signals unabdingbar. Drahtlose Mikrofonsysteme werden sowohl in der Bühnentechnik, für ENG (Electronic-News-Gathering) und bei PMSE-Übertragungen eingesetzt. PMSE bedeutet dabei "Programme Making and Special Events", also typischerweise Reportage-Einsätze von Nachrichten-Fernsehteams unmittelbar am Ort des Geschehens.

Für die akustischen Übertragungen verlangt der Fernsehzuschauer Lippensynchronität, deshalb ist eine kurze Latenzzeit für die Übertragung der akustischen Signale gefordert. Ein zeitlich versetztes Aussenden des Tonsignals wird vom Fernsehzuschauer als äußerst störend empfunden, sobald der Zeitversatz eine bestimmte Schwelle überschreitet. In der Bühnentechnik wird ebenfalls lippensynchrone Übertragung gefordert; hier kommt jedoch noch eine weitere Schwierigkeit hinzu: Wenn das Signal an den Akteur (z.B. den Sänger) per IEM (In-Ear-Monitoring) zur Kontrolle des eigenen Gesangs zurückübertragen wird, muss das akustische Signal zweimal eine Funkübertragung passieren, nämlich einmal vom Mikrofon an das Tonmischpult, dann als dort abgemischtes Signal über den IEM-Sender zurück an den IEM-Empfänger des Künstlers, den dieser typischerweise am Gürtel trägt. Von diesem Empfänger wird das Signal dann an einen In-Ear-Hörer ausgegeben. So entsteht die doppelte Laufzeit über die Funkstrecke; hinzu kommt eine Latenzzeit, die durch die Verarbeitung im Mischpult des Tonmeisters zwangsläufig entsteht.

Versuche haben ergeben, dass hier eine Gesamtverzögerungszeit von 4 ms bereits als störend empfunden wird. Je länger diese ausfällt, desto störender wird sie. Es ergeben sich durch das gleichzeitige Hören des direkten Schalls und des durch das IEM-System wiedergegebenen verzögerten Schalls, außerdem durch Auslöschung, störende Kammfiltereffekte, die von Künstlern in der Regel als äußerst behindernd für deren Vortrag empfunden werden. Es kann durch diese Effekte (Laufzeit- plus Kammfiltereffekt) im Extremfall dazu kommen, dass Sänger oder Redner nicht in der Lage sind, ihren Auftritt zu absolvieren.

Aufgrund dieser hohen Anforderungen an kleine Übertragungslatenz (d.h. kurze Verzögerungszeit) werden derartige Systeme bisher basierend auf proprietären Funksystemen realisiert, welche in speziellen hierfür vorgesehenen Frequenzbändern betrieben werden. Da dies proprietäre Systeme sind, müssen sie (in Form von Hard- und Software, sowie eventuell dabei genutzte integrierte Schaltungen) entsprechend entwickelt werden. Ein Zurückgreifen auf integrierte Schaltungen, die z.B. für den Mobilfunkmarkt preiswert zur Verfügung stehen, ist nicht möglich.

Die Frequenzbänder für die drahtlose Übertragung akustischer Signale sind zudem begrenzt. Sofern Bühnenveranstaltungen geplant werden, muss man sich vorher um genügend freie Frequenzen für die Übertragung bemühen. Dies ist bei spontanen Einsätzen aber nicht immer möglich: So kann es bei plötzlichen ungeplanten Vor-Ort-Einsätzen durchaus zu Komplikationen kommen, weil (beispielsweise bei Naturkatastrophen) sofort mehrere Fernsehteams zum Ort des Geschehens eilen, um von dort aktuell zu berichten. Eine vorherige Frequenzkoordination zwischen ihnen ist in solchen Fällen quasi unmöglich, da jedes Team sofort mit der Reportage beginnt. In diesem Fall wäre der Rückgriff auf eine fremde Instanz vorteilhaft, die die Vergabe der Funkfrequenzen vornimmt. Es wäre für in der Nähe stattfindende Bühnenveranstaltungen außerdem wünschenswert, wenn "ihre" Frequenzen nicht Gefahr liefen, durch plötzlich stattfindende News-Gathering-Veranstaltungen gestört zu werden.

Im Übrigen ist die Tendenz erkennbar, Frequenzen an die Meistbietenden für einen bestimmten Zeitraum (mehrere Jahre) zu verkaufen. Dies ist zuletzt für weite Frequenzbereiche als Versteigerung an Mobilfunkgesellschaften geschehen. Die relativ dazu schmalen Frequenzbereiche für die Benutzung drahtloser Mikrofone wurden dabei bei der letzten Versteigerung noch ausgespart und existieren weiterhin als geschützte Ressource nur für diesen Zweck. Es ist aber absehbar, dass ein gewisser Druck auf die politischen Instanzen entsteht, auch diese Bereiche zur allgemeinen Nutzung freizugeben.

Es ist deshalb wünschenswert, ein Verfahren bereitzustellen, das auch die Übertragung solcher akustischen (d.h. Audio-) Signale in einem Standardverfahren ermöglichen würde, wie dies heutzutage für die Mobilfunknutzung genormt ist. Dieses wird ja nicht nur ausschließlich für die mobilen Telefone genutzt, sondern lässt auch eine große Anzahl anderer Dienste (z.B. Datenübertragungen, Filetransfer usw.) zu. Charakteristisch für diese Dienste ist aber allgemein, dass es bei ihnen nicht auf so geringe Latenzzeiten ankommt wie bei der oben skizzierten Übertragung von akustischen Mikrofondaten.

Beim normalen Telefonat mit mobilen Telefonen kommt es z.B. auf eine deutlich längere Signalverzögerung nicht an, weil sie vom Nutzer nicht als störend wahrgenommen wird. Dieser weiß ja nicht genau, wann der Telefonpartner anfängt zu sprechen. Latenzzeiten im Bereich bis zu 100 ms werden deshalb praktisch nicht bemerkt, und können somit auch nicht störend in Erscheinung treten. Bei Datenübertragungen (z.B. in elektronischen Diskussionsforen) treffen dieselben Randbedingungen zu. Hier wären von den Nutzeranforderungen sogar noch größere Latenzzeiten zulässig. Für einen Filetransfer (z.B. dem Herunterladen von Dokumenten oder Internet-Sites) sind die Anforderungen sogar noch lockerer: Hier werden Latenzzeiten von 500 ms durchaus akzeptiert. Wichtig ist dafür (bei größeren Dateien) eher die mittlere Übertragungsrate.

Da es für die anderen Dienste also nicht wichtig ist, dass die Latenzzeit möglichst gering gehalten wird, wurde die Optimierung dieser Netze primär nach anderen Entwicklungszielen ausgelegt. Für eine wirtschaftliche Auslegung hat sich somit ein inzwischen genormtes Verfahren etabliert, das die gewünschten Anforderungen mit möglichst niedrigem Aufwand (Verbrauch von Frequenzen, Energieeffizienz usw.) vernünftig erfüllen kann. Eine geringe Latenzzeit gehörte nicht zu den hoch priorisierten Entwicklungszielen der Mobilfunknetze. Somit hat sich für die Mobilfunknetze ein Standard etabliert, der eine hinreichend kurze Latenzzeit für die drahtlose Mikrofonübertragung von Audiodaten nicht gewährleistet: z.B. kommen im Fall von LTE systembedingt Übertragungszeiten von deutlich über 4 ms zu Stande. In Mobilfunknetzen baut eine Basisstation separate Verbindungen zu den teilnehmenden Mobilfunkgeräten (Terminals) auf. Dabei kann in jeder Verbindung auch jede Übertragungsrichtung unterschiedliche Eigenschaften haben und ist daher separat implementiert, d.h. jede Verbindung enthält einen Downlink von der Basisstation zum Terminal und einen Uplink vom Terminal zur Basisstation. Daten, die von einem ersten Terminal an ein zweites Terminal geschickt werden, durchlaufen also erst einen Uplink des ersten Terminals und werden dann (nachdem sie ggf. von der Basisstation, mit der das erste Terminal bzw. der Sender verbunden ist, über ein Daten-/Telefonnetz an eine andere Basisstation weitergeleitet wurden, mit der das zweite Terminal bzw. der Empfänger verbunden ist) von der Empfänger-Basisstation über den Downlink des zweiten Terminals an dieses weitergeschickt. Dabei werden die Daten in der Sender-Basisstation decodiert, um ihren korrekten Empfang zu prüfen. Nur korrekt empfangene Daten werden von der (Sender-) Basisstation weitergeleitet, während fehlerhaft empfangene Daten von ihr verworfen und neu angefordert werden können. Dazu wird z.B. in LTE der konfigurierbare H-ARQ (Hybrid-Automated Repeat Request) auf ISO/OSI Layer 2 benutzt.

Der oben beschriebene Mechanismus greift im Prinzip auch, wenn beide Terminals bei derselben Basisstation angemeldet sind: die über den Uplink vom ersten Terminal empfangenen Daten werden von der Basisstation geprüft, ggf. neu angefordert, und dann umgesetzt auf andere Frequenzen, um dann den Downlink des zweiten Terminals zu durchlaufen. Dabei entstehen die oben genannten Latenzen von deutlich mehr als 4 ms.

DE 10 2015 210 873 A1 beschreibt ein Verfahren zur latenzarmen Übertragung von Audiodaten in einem Mobilfunknetzwerk, das ein Terminal, eine Basisstation und einen Audioempfänger aufweist. Daten werden von einem ersten Terminal an die Basisstation übertragen. Die Drahtlosübertragung basiert auf einer Orthogonal-Frequency-Division-Multiplexing-Übertragung während eines TDMA-Zeitschlitzes. Jeder TDMA-Frame weist eine Mehrzahl von Slots auf, welche jeweils genau ein OFDM-Symbol aufweisen. Damit wird in jedem TDMA-Slot genau ein OFDM-Symbol übertragen.

EP 3 021 628 A1 beschreibt ein mobiles Kommunikationssystem, bei welchem eine direkte Übertragung von Audiosignalen zwischen zwei Endgeräten stattfindet.

### Zusammenfassung der Erfindung

Es ist insbesondere eine Aufgabe der Erfindung, ein drahtloses Übertragungsverfahren für Mikrofonsysteme (oder für Audiodaten allgemein) zur Verfügung zu stellen, das sich innerhalb eines Mobilfunknetzes, z.B. des LTE-Netzes, benutzen lässt. Dies wird erfindungsgemäß dadurch erreicht, dass sich das Verfahren so genau wie möglich an die dort geltenden Standards hält, sodass es von den Basisstationen mit verwaltet werden kann, dabei aber über den Standard hinausgehende Besonderheiten aufweist. Das erfindungsgemäße Verfahren kann sich dabei der zahlreichen Vorteile des Mobilfunknetzes bedienen, dabei aber auf jeden Fall kollisionsfrei in den dort benutzten Frequenzbereichen arbeiten. Diese Kollisionsfreiheit betrifft zum einen das logische Format der ausgesandten Daten, d.h. es erfüllt die aktuellen Zulassungsregularien z.B. in den LTE-Netzen und ist demgemäß in dessen Frequenzbändern benutzbar. Zum anderen kann aber auch bestimmte Koordinationsarbeit durch die Mobilfunk-Basisstation erledigt werden. Insbesondere toleriert die Basisstation das vom drahtlosen Mikrofon ausgesandte Format insoweit, dass sie diese Verbindungen nicht beendet, wenn sie die darin befindlichen Daten für fehlerhaft hält. Dabei wird erfindungsgemäß die Tatsache ausgenutzt, dass der Sender (also das Drahtlosmikrofon) sowie ein Empfänger des Audioübertragungssystems mit derselben Basisstation verbunden sind, so dass der Empfänger direkten Zugriff auf die über den Uplink des Senders übertragenen Daten haben kann. Dies kann alternativ auch bei Anordnungen möglich sein, bei denen Sender und Empfänger mit verschiedenen, aber nahe beieinander angeordneten Basis-stationen verbunden sind. Trotzdem sind sowohl der Sender (der im Folgenden auch als Terminal bezeichnet wird) als auch der Empfänger regulär entsprechend den gültigen Regeln des jeweils benutzten Mobilfunkstandards als Teilnehmer bei der Basisstation angemeldet, so dass über diese Verbindung z.B. Kontrolldaten übertragen werden können. Die eigentlichen Audiodaten bezieht der Empfänger direkt vom Uplink des Terminals. Von der Basisstation kann er entsprechend konfiguriert werden, z.B. indem diese ihm Zugriff auf den Uplink des Terminals ermöglicht.

So lassen sich dann auch für die Hardware solcher drahtloser Mikrofonsysteme für die Übertragung von Audiodaten die elektronischen integrierten Schaltkreise (ICs) benutzen, die eigentlich für den Mobilfunk entwickelt worden sind. Dies trägt zu einer Vereinheitlichung der Netzinfrastruktur sowie zu einem günstigeren Preis der Systeme bei.

Die Aufgabe der Erfindung wird durch ein Verfahren zur latenzarmen Audioübertragung in einem Mobilfunk-Netzwerk gemäß Anspruch 1 sowie durch ein Audioübertragungssystem gemäß Anspruch 14 gelöst, das mindestens ein Drahtlos-Mikrofon nach Anspruch 11 und einen Empfänger nach Anspruch 13 umfasst. Als latenzarm wird hier ein Übertragungsverfahren angesehen, das sicher und für einen kontinuierlichen Audiodatenstrom eine Latenz von unter 4 ms erreicht.

Somit wird ein Verfahren zur latenzarmen Audioübertragung in einem Mobilfunk-Netzwerk vorgesehen. Ein Audioübertragungssystem weist mindestens ein Terminal, eine Basisstation und einen Audioempfänger auf. Audiodaten werden von dem mindestens einen Terminal über einen Uplink gesendet, über den das Terminal mit der Basisstation drahtlos verbunden ist. Ein Audioempfänger, der mit derselben Basisstation drahtlos verbunden ist, empfängt die vom Terminal über den Uplink gesendeten Audiodaten direkt. Zwar empfängt auch die Basisstation diese Audiodaten, kann sie aber auf Grund einer nicht-standardkonformen, dem Terminal und dem Audioempfänger jedoch bekannten Codierung nicht decodieren. Eine Frequenzressourcenzuweisung für das Terminal erfolgt durch die Basisstation in einer Ausführungsform persistent, d.h. sie erfolgt so, dass das Terminal einen kontinuierlichen Datenstrom senden kann. Eine Audioübertragung in den zugewiesenen Ressourcen vom Terminal zum Audioempfänger erfolgt in einer dem jeweiligen Mobilfunkstandard konformen Wellenform. Während allerdings gemäß den üblichen Mobilfunkstandards die übertragenen Daten nur in Blöcken von sogenannten Subframes codiert und decodiert werden können, die z.B. im Fall von LTE mindestens 1 ms dauern, werden erfindungsgemäß die Audiodaten in kürzeren Blöcken codiert, so dass der Audioempfänger bereits Audiodaten decodieren und verarbeiten kann, bevor ein vollständiger Subframe empfangen wurde. Dabei kann sich die Basisstation diesbezüglich standardkonform verhalten, so dass sie nicht in der Lage ist, die per Uplink vom Terminal empfangenen Daten zu decodieren, und diese daher nicht über den Downlink des Audioempfängers an diesen weiterleitet. Da jedoch der erfindungsgemäße Audioempfänger die Daten direkt vom Uplink des Terminals empfängt, erhält er die Daten trotzdem. Dabei entfällt die übliche Umsetzung in der Basisstation auf den Downlink zum Empfänger, wodurch die Latenz des Systems weiter reduziert wird.

Der Empfänger stellt also eine besondere Art von Gerät dar, da er zwar im Mobilfunknetz als mobiles Terminal angemeldet ist, jedoch trotzdem in der Lage ist, den Uplink zu empfangen; dies ist normalerweise nur der Basisstation vorbehalten.

Gemäß einem Aspekt der vorliegenden Erfindung ist der übertragene Code der Audiodaten nach kürzerer Zeit abgeschlossen bzw. terminiert als im jeweiligen Mobilfunkstandard vorgeschrieben. Abschluss oder Terminierung bedeutet dabei, dass das Codieren bzw. Decodieren der Daten eines Datenrahmens durch andere Daten desselben Datenrahmens beeinflusst wird, aber nicht durch Daten anderer Datenrahmen. In einer Ausführungsform ist der übertragene Code der Audiodaten pro höchstens zwei OFDM-Symbolen abgeschlossen bzw. terminiert. Das bedeutet, dass ein Codierer bzw. Decodierer, der normalerweise Sequenzen von mehreren Datenbits seriell verarbeitet und normalerweise erst zum Ende des Subframes wieder in einen Ausgangszustand versetzt wird, bereits nach einer kürzeren Anzahl von Bits, die auf maximal zwei OFDM-Symbole moduliert werden, wieder in seinen neutralen Ausgangszustand versetzt wird. Dadurch wird die Latenzzeit der Übertragung reduziert, weil der Decoder schon eher, z.B. nach zwei vollständig empfangenen OFDM-Symbolen, mit dem Decodieren beginnen kann, ohne auf das Ende des Subframes warten zu müssen, wie es konventionell üblich wäre. Bei einer erfindungsgemäßen Übertragung von Audiodaten lassen sich dadurch auch in einem Mobilfunknetz reduzierte Latenzzeiten von deutlich unter 4 ms erreichen.

In einer Ausführungsform der vorliegenden Erfindung entspricht das Mobilfunknetz dem LTE-Standard. In einer anderen Ausführungsform entspricht das Mobilfunknetz dem WiMAX-Standard. In einer weiteren Ausführungsform kann das Mobilfunknetz einem anderen Standard entsprechen, der auf einem Mehrträgerverfahren wie z.B. OFDM (Orthogonal Frequency Division Multiplex) und/oder der Codierung von Symbolen auf Subframe-Ebene basiert.

Gemäß einem weiteren Aspekt der vorliegenden Erfindung können gemeinsam codierte bzw. decodierte Datengruppen oder OFDM-Symbole eine Prüfsumme (z.B. CRC) enthalten. In einer Ausführungsform kann in jedem OFDM-Symbol ein CRC übertragen werden. Diese Prüfsumme kann zusätzlich zu einer (ggf. vom Mobilfunkstandard vorgesehenen) Prüfsumme über den Subframe sein und ist unabhängig davon.

Die Erfindung betrifft auch einen Drahtlos-Taschensender für ein Mikrofon, der zum Betrieb als mobiles Terminal in einem Mobilfunk-Netzwerk konfiguriert ist, und der enthält:
eine erste Codiereinheit, die von dem Terminal zu sendende Daten gemäß einem in dem Mobilfunk-Netzwerk benutzten ersten Format codiert, eine Hochfrequenz-Modulationseinheit zum Modulieren der gemäß dem ersten Format codierten Daten gemäß einem in dem Mobilfunk-Netzwerk benutzten Modulationsverfahren, wobei die modulierten Daten über einen Uplink gesendet werden, und eine zweiten Codiereinheit, die Audiodaten von einer Mikrofoneinheit erhält und gemäß einem zweiten Format codiert. Gemäß dem zweiten Format sind die ersten Datenrahmen in eine ganzzahlige Anzahl von zweiten Datenrahmen aufgeteilt, wobei die zweiten Datenrahmen kürzer als die ersten Datenrahmen sind und die gemäß dem zweiten Format codierten Audiodaten enthalten. Die zweiten Datenrahmen sind terminiert, d.h. das Codieren der Audiodaten eines zweiten Datenrahmens wird durch andere Audiodaten desselben zweiten Datenrahmens, aber nicht durch Audiodaten eines anderen zweiten Datenrahmens beeinflusst. Der Drahtlos-Taschensender kann auch als Drahtlos-Mikrofon ausgeführt sein und eine Mikrofoneinheit enthalten, die eine Mikrofonkapsel enthält und die von der Mikrofonkapsel aufgenommene Audiodaten ausgibt. Die Mikrofoneinheit kann in den Drahtlos-Taschensender bzw. das Drahtlos-Mikrofon integriert sein (z.B. als drahtloses Handmikrofon) oder als separates Element daran angeschlossen werden. Dieser Anschluss der Mikrofoneinheit kann drahtgebunden oder drahtlos über eine separate Verbindung sein.

Weiterhin betrifft die Erfindung einen drahtlosen Audioempfänger, der zum Betrieb in einem Mobilfunk-Netzwerk konfiguriert ist, mit einer Hochfrequenz-Demodulationseinheit zum Demodulieren von empfangenen Daten gemäß einem in dem Mobilfunk-Netzwerk benutzten Demodulationsverfahren, einer ersten Decodiereinheit und einer zweiten Decodiereinheit. Die Hochfrequenz-Demodulationseinheit gibt demodulierte Daten aus, die entweder gemäß einem in dem Mobilfunk-Netzwerk benutzten ersten Format oder gemäß einem anderen zweiten Format codiert sind, wobei unabhängig vom Format dieselbe Demodulation und derselbe Hochfrequenzbereich benutzt werden. Die erste Decodiereinheit decodiert diejenigen demodulierten Daten, die gemäß dem in dem Mobilfunk-Netzwerk benutzten ersten Format codiert sind, und die zweite Decodiereinheit decodiert diejenigen demodulierten Daten, die gemäß dem zweiten Format codiert sind. Während das erste Format erste Datenrahmen nutzt und die erste Decodiereinheit die Daten rahmenweise gemäß den ersten Datenrahmen decodiert, sind gemäß dem zweiten Format die ersten Datenrahmen in eine ganzzahlige Anzahl von zweiten Datenrahmen aufgeteilt, wobei die zweiten Datenrahmen kürzer als die ersten Datenrahmen sind und gemäß dem zweiten Format codierte Audiodaten enthalten. Das Decodieren der Daten jedes der ersten Datenrahmen wird durch andere Daten desselben ersten Datenrahmens, aber nicht durch Daten anderer erster Datenrahmen beeinflusst. Ebenso wird das Decodieren der Daten jedes der zweiten Datenrahmen durch andere Daten desselben zweiten Datenrahmens, aber nicht durch Daten anderer zweiter Datenrahmen beeinflusst.

Die Erfindung betrifft ebenfalls ein Audioübertragungssystem in einem Mobilfunk-Netzwerk, das ein als Terminal arbeitendes Drahtlos-Mikrofon, eine Basisstation und einen Audioempfänger umfasst. Dabei ist das Terminal dazu ausgestaltet, Daten über einen Uplink zu senden in einer Wellenform, die mit einer im Mobilfunk-Netzwerk benutzten Wellenform konform ist. Das Terminal nutzt die ihm von der Basisstation zugewiesenen Frequenzen und Zeitschlitze für den Uplink alternativ für das Senden sowohl von ersten Rahmen, die gemäß dem ersten Format codiert sind, als auch von zweiten Rahmen, die gemäß dem zweiten Format codiert sind.

Vorteile und Ausführungsbeispiele der Erfindung werden nachstehend unter Bezugnahme auf die Zeichnungen näher erläutert.

### Kurze Beschreibung der Zeichnungen

- Fig. 1: zeigt ein Blockschaltbild eines drahtlosen Mikrofons mit In-Ear Rückkanal gemäß dem Stand der Technik,
- Fig. 2: zeigt eine schematische Darstellung eines im LTE-Netz benutzten Datenformats,
- Fig. 3: zeigt eine erfindungsgemäße Nutzung des im LTE-Netz benutzten Datenformats,
- Fig. 4: zeigt eine schematische Darstellung eines Audioübertragungssystems gemäß der Erfindung,
- Fig. 5: zeigt die Struktur einer LTE-Einheit auf der Sendeseite, und
- Fig. 6: zeigt die Struktur einer LTE-Einheit auf der Empfangsseite.

### Detaillierte Beschreibung

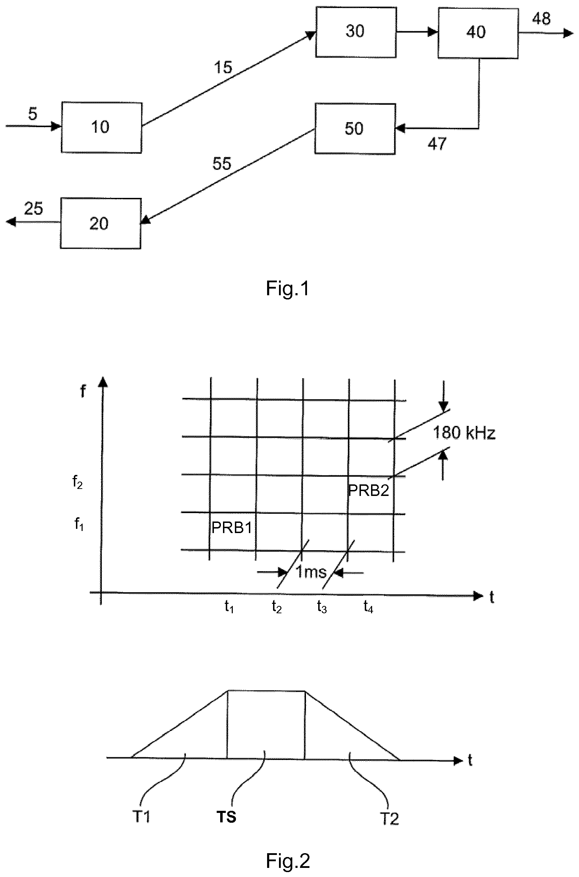

Fig. 1 zeigt ein drahtloses Mikrofon für eine Audioübertragung mit einem drahtlosen Rücckanal gemäß dem Stand der Technik. Ein Mikrofonsignal 5 wird einem Sender 10 zugeführt, der eine Modulation und Aussendung des Signals vornimmt. Über den Funkweg 15 erreicht dieses den Empfänger 30, der das Signal demoduliert und zum Mischpult 40 weiterleitet. Hier laufen typischerweise die Signale verschiedener Empfänger ein, werden dort abgemischt und über den Pfad 48 zur weiteren Verarbeitung (Beschallungsanlage, Aufzeichnung, TV-Sendung usw.) bereitgestellt. Ein speziell für den Nutzer des Mikrofons (z.B. Künstler) abgemischtes Signal läuft über den Pfad 47 zum IEM-Sender 50 (IEM = In-Ear Monitoring). Dieser Sender 50 schickt das von ihm modulierte Signal 55 auf einer weiteren Funkfrequenz zum In-Ear-Empfänger 20 an den Nutzer zurück. Der Empfänger 20 demoduliert das Signal und gibt es über den Pfad 25 aus. Typischerweise wird es von dort über In-Ear-Hörer vom Nutzer abgehört.

Das Mikrofonsignal 5 kann auch ein elektrisch abgegriffenes Instrumentensignal (z.B. von einer Gitarre) darstellen. Wenn der Künstler beispielsweise singt (über Mikrofon) und ein Instrument spielt, sind der Sender 10 und der Empfänger 30 doppelt vorhanden. In der Regel wird dann vom Mischpult ein gemäß den Anforderungen gemischtes Signal (Gesang und Gitarre) auf den Sender 50 gegeben. Der Sender 50 und der Empfänger 20 für den Rückkanal sind also (pro Künstler) nur einmal vorhanden.

Pro Künstler oder Instrument sind somit die entsprechenden Geräte Sender 10, Empfänger 30, Rückkanal- (z.B. In-Ear-) Sender 50 und Rückkanal- (z.B. In-Ear-) Empfänger 20 bereitzustellen. Das Mischpult 40, das die verschiedenen Eingangssignale von den Empfängern 30 entgegennimmt und nach dem Abmischen den Ausgang 48 und die Ausgänge 47 für jeden Künstler bzw. jedes Instrument bereitstellt, ist nur einmal vorhanden. Anhand der Fig. 1 ist erkennbar, dass der Künstler sein eigenes Signal 25 erst nach dem Durchlauf zweier Funkstrecken 15 und 55 zurückerhält und somit hört. Es addieren sich somit die Laufzeiten beider Funkstrecken. Dies führt bei einer Dauer von mehr als 4 ms zu den beschriebenen störenden Effekten.

Die Zeit für den Durchlauf der Funkstrecke darf dabei nicht als reine Laufzeit der elektromagnetischen Welle vom Sender zum Empfänger verstanden werden: Da diese sich mit Lichtgeschwindigkeit ausbreitet, ist sie sicherlich kurz genug und tritt nicht störend in Erscheinung. Vielmehr ist hier mit der Durchlaufzeit die Dauer gemeint, die das gesamte Sendeverfahren benötigt. D.h. es ist die Zeit gemeint, die das Aufbereiten des einlaufenden akustischen Signals, das Zwischenspeichern des digitalisierten akustischen Signals in dem Zeitraum, in dem nicht gesendet werden kann, die Modulation, das Verstärken im Sender, die Wellenlaufzeit zum Empfänger, die Vorverstärkung im Empfänger, die Demodulation, das Zwischenspeichern des eventuell parallel empfangenen aber seriell auszugebenden Signals, die Verstärkung des demodulierten Signals und die Ausgabe dieses Signals benötigt. Sofern man nach dem Stand der Technik z.B. analoge Frequenzmodulation benutzt, sind alle diese Zeiten hinreichend kurz, sodass man sich bisher nur in Ausnahmefällen Gedanken darüber machen musste. Bei der Verwendung digitaler Tontechnik entstehen hierbei jedoch Verarbeitungszeiten, die der beschriebenen Anwendung entgegenstehen oder diese schlimmstenfalls sogar verhindern können.

In Fig. 2 werden die Zusammenhänge im derzeit aktuellen LTE-Mobilfunknetz dargestellt. Sie zeigt den Stand der Technik und erläutert das systembedingte Zustandekommen der Übertragungszeiten von deutlich über 4 ms. Funkübertragungssysteme im Mobilfunkbereich, z.B. LTE oder WiMAX, verwenden Mehrträgerverfahren zur effizienten Entzerrung des Funkkanals. Außerdem ist ein zeitlicher Ablauf festgelegt, der sogenannte Rahmen (Radioframe bzw. Frame). Dieser ist in Subframes unterteilt, die in LTE je 1 ms dauern und das gesamte benutzte Frequenzspektrum umfassen. Um auf flexible Art viele oder weniger Nutzer gleichzeitig mit Daten versorgen zu können, werden die Funkressourcen in "physikalische Ressourcenblocks" (PRBs) aufgeteilt. Z.B. besteht in LTE ein PRB aus 12 OFDM-Unterträgern in Frequenzrichtung (insgesamt 180 kHz) und 14 OFDM-Symbolen in Zeitrichtung (insgesamt 1ms). Den Nutzern werden eine unterschiedliche Anzahl von PRBs zugeteilt, um deren verschiedene Datenratenanforderungen flexibel erfüllen zu können. Systemimmanent ist dabei ein Abschluss des Fehlerschutzes über einen Subframe, der in LTE einem Zeitintervall von 1 ms entspricht.

In Fig. 2 dargestellt ist im Frequenzraum f über der Zeit t ein Ausschnitt des sogenannten "Radioframes", der im Fall von LTE 10 ms dauert. Eine Basisstation im LTE-Netz vergibt in Zeitschlitzen von 1 ms Dauer jeweils 180 kHz breite Frequenzbereiche zur Nutzung an die verschiedenen Nutzer, nämlich die "physikalischen Ressourcenblocks" (PRBs). Jeder Nutzer darf diese ihm von der Basisstation zugeteilten Frequenzbereiche für die ihm zugeteilte Zeit nutzen. Zum Beispiel kann einem Nutzer für seinen Uplink ein erster physikalischer Ressourcenblock PRB1 in einem Frequenzbereich f₁ und einem Subframe bzw. Zeitschlitz t₁ sowie ein zweiter physikalischer Ressourcenblock PRB2 in einem anderen Frequenzbereich f₂ und einem anderen Zeitschlitz t₄ zugeordnet sein. Eine sogenannte persistente Zuordnung liegt dann vor, wenn einem Nutzer in jedem Subframe bzw. Zeitschlitz mindestens eine benötigte Menge an physikalischen Ressourcenblocks zugeordnet ist, so dass er kontinuierlich (Audio-) Daten übertragen kann, ohne sie zwischenspeichern zu müssen, Dabei unterliegt das Datenformat innerhalb dieser in LTE 1 ms langen Subframes bestimmten Regeln. Die Basisstation, die u.a. mit einer eigenen Sendeeinheit und Empfangseinheit verbunden ist oder diese enthält, ist für die Gesamtkoordination der einzelnen Teilnehmer verantwortlich: Sie vergibt die PRBs an die einzelnen Teilnehmer, gleicht die durch die unterschiedlichen Entfernungen der Teilnehmer entstehenden Laufzeitunterschiede aus, nimmt die Datenblöcke durch ihre Empfangseinheit an und decodiert die in diesen Blöcken enthaltenen Daten. Wenn die Daten für Empfänger bestimmt sind, die sich ebenfalls in Reichweite der Basisstation befinden, dann codiert sie diese Daten gemäß den Anforderungen der Empfänger neu und gibt sie an ihre Sendeeinheit weiter.

Die Codierung und Aufbereitung der für den Zeitschlitz von 1 ms Dauer vorgesehenen Daten nimmt dabei typischerweise 1,5 ms T1 in Anspruch, wie im unteren Teil von Fig. 2 dargestellt. Die Decodierung und Prüfung der Daten benötigt ebenfalls 1,5 ms T2. Die eigentliche Aussendung bzw. Übertragung erfolgt während der Zeit TS (1 ms). Somit kommt schon für diese Schritte in bekannten LTE-Systemen in Summe eine Gesamtverarbeitungszeit von 4 ms (= 1,5 ms + 1 ms + 1,5 ms) zusammen, Dies ist die Mindestdurchlaufzeit pro Richtung im regulären LTE-Protokoll.

Verlängern kann sich diese u.a. noch dadurch, dass sich die Daten als fehlerhaft erweisen bzw. Datenpakete verloren gehen. In diesen Fällen wird der fehlerhafte Datenblock nicht weitergeleitet, sondern die Basisstation fragt diese Daten beim Sender ein weiteres Mal an. Hierdurch entstehen natürlich zusätzliche Zeitverzögerungen. Es ist ersichtlich, dass ein solches unter Normbedingungen laufendes konventionelles System den Anforderungen einer Durchlaufzeit von weniger als 4 ms für die Hin- und Rückstrecke nicht erfüllen kann. Diese Gesamtverarbeitungszeit der Basisstation von 4 ms ist möglicherweise nicht die technisch minimal erreichbare untere Grenze; vielmehr wurde sie bei der Auslegung des gesamten LTE-Systems so festgelegt, weil sich dann alle an das System gestellten Anforderungen mit dem geringsten Auswand erreichen ließen. Dies ist daher die Zeit, die alle LTE-Basisstationen demgemäß auch einhalten, da sie sich - um mit den externen Geräten (Mobiltelefone) kommunizieren zu können - natürlich an den Standard halten muss. Diese Zeitparameter sind so gewählt, dass sie bezüglich der angestrebten Einsatzfälle im Mobilfunk hinreichend kurz sind. Hinsichtlich der Telefonienutzung stellt dies keine Restriktion dar. Jede Art von Datenübertragung, die keine Sprachdaten betrifft und für das LTE-Netz standardmäßig vorgesehen ist, stellt hier noch weit geringere Ansprüche an die Latenzzeit. Der beschriebene Einsatzfall der Übertragung von Audiodaten über Drahtlosmikrofone wird allerdings üblicherweise bei der Spezifikation von Mobilfunknetzen nicht mitberücksichtigt; stattdessen werden oft für diese Zwecke geschützte Frequenzbereiche freigehalten.

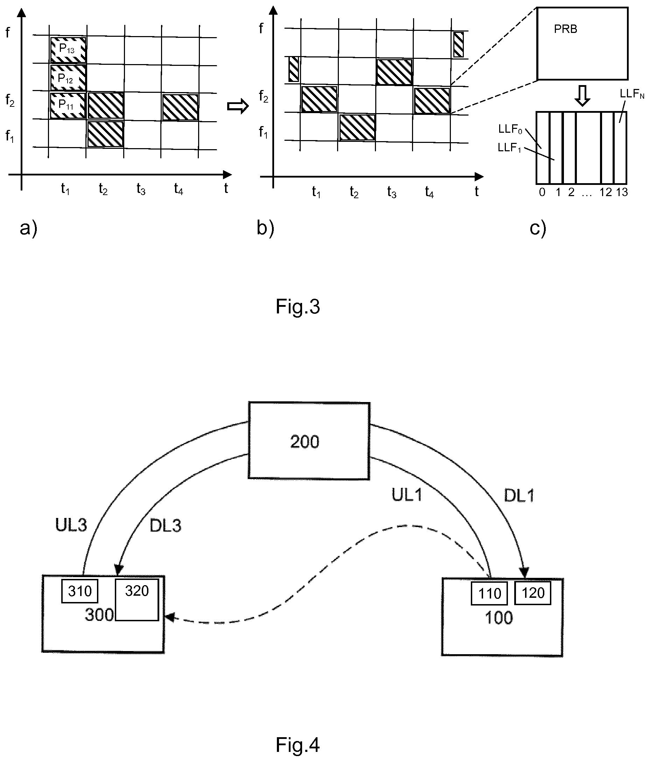

Fig. 3 erläutert eine erfindungsgemäße Nutzung des im LTE-Netz benutzten Datenformats. In Fig.3 a) ist nochmals eine konventionelle Konfiguration dargestellt. Ein Scheduler in der Basisstation teilt einem bestimmten Nutzer z.B. in einem Subframe t₁ drei PRBs P₁₁-P₁₃ zu. In den folgenden Subframes t₂-t₄ werden demselben Nutzer erst zwei PRBs, dann kein PRB und dann ein einzelner PRB zugeteilt. Im Mittel über vier Subframes erhält der Nutzer damit 1,5 PRBs. Der Nutzer kann allerdings nicht kontinuierlich senden, da er z.B. in t₃ keinen PRB zur Verfügung hat. Erfindungsgemäß erhält der Nutzer in jedem Subframe mindestens eine bestimmte Menge an PRBs, z.B. je einen PRB, wie in Fig.3 b) dargestellt. Weiterhin werden die PRBs zwar standardgemäß entsprechend LTE bzw. entsprechend dem jeweiligen Mobilfunknetz übertragen, aber die in dem PRB übertragenen Daten sind erfindungsgemäß nicht konventionell codiert. Damit entspricht zwar die Wellenform des übertragenen Signals dem LTE-Standard, nicht aber der Inhalt. Während konventionell alle in dem PRB übertragenen Daten gemeinsam codiert und terminiert werden, wird der PRB erfindungsgemäß in Abschnitte LLF₀,LLF₁,...,LLF_{N} (sogenannte "low latency frames") aufgeteilt, wie in Fig. 3 c). Allgemein stellen die PRBs erste Datenrahmen von 1 ms Dauer dar, während die Abschnitte LLF₀,..., LLF_{N} zweite kürzere Datenrahmen von z.B. 1/7 ms Dauer darstellen. Jeder Abschnitt entspricht einem oder mehreren OFDM-Symbolen bzw. Trägerfrequenzen. Im Fall von LTE, wo der PRB 14 OFDM-Symbole enthält, lassen sich z.B. zwei Abschnitte mit je sieben Symbolen oder sieben Abschnitte mit je zwei Symbolen nutzen. Im Prinzip könnten auch vierzehn Abschnitte mit je einem Symbol benutzt werden; allerdings müssen gelegentlich Kontrolldaten in einem PRB übertragen werden, so dass nicht in jedem PRB alle OFDM-Symbole für den Nutzer zur Verfügung stehen. Ein Vorteil dieser Konfiguration mit persistenter Zuordnung und weiterer Unterteilung der Subframes besteht darin, dass in jedem Subframe Nutzerdaten (insbesondere Audiodaten) übertragen werden können und damit eine Latenzreduktion erreicht wird, obwohl das Signal äußerlich als "normales" LTE-Signal erscheint und innerhalb des LTE-Netzes übertragen werden kann, Die Latenzreduktion wird dadurch erreicht, dass die in den Abschnitten (d.h. den zweiten Datenrahmen) übertragenen Daten terminiert sind, d.h. das Codieren und Decodieren der Daten eines zweiten Datenrahmens (z.B. LLF₀) wird zwar durch andere Daten desselben zweiten Datenrahmens, aber nicht durch Daten eines anderen zweiten Datenrahmens (z.B. LLF₁) beeinflusst.

Fig. 4 zeigt eine schematische Darstellung eines Audioübertragungssystems gemäß der Erfindung. Die Erfindung betrifft ein System und ein Verfahren zur latenzarmen Audioübertragung in einem Mobilfunk-Netzwerk, insbesondere für ein "Programme Making and Special Event"-System (PMSE) so wie z.B. ein drahtloses Mikrofonsystem.

Das Audioübertragungssystem gemäß einer Ausführungsform der Erfindung stellt ein LTE-konformes Audioübertragungssystem dar. Das Audioübertragungssystem weist ein Terminal 100 auf, welches beispielsweise als ein Drahtlosmikrofon ausgestaltet sein kann. Ferner ist eine LTE-Basisstation 200 vorgesehen, welche eine LTE-konforme Übertragung von Daten ermöglicht. Das Terminal 100 ist über einen Uplink UL1 und einen Downlink DL1 mit der Basisstation 200 verbunden. Die über den Uplink UL1 gesendeten Daten werden dabei in einem in einer Mobilfunk-Sendeeinheit 110 enthaltenen Codierer codiert, und die über den Downlink DL1 empfangenen Daten werden in einem in einer Mobilfunk-Empfangseinheit 120 enthaltenen Decoder decodiert. Erfindungsgemäß enthält die Mobilfunk-Sendeeinheit 110 einen zweiten Codierer, bzw. einen Codierer, der neben seiner standardkonformen Funktionalität in einer zweiten Betriebsart auch eine erfindungsgemäß modifizierte Codierung durchführen kann. Ferner ist mindestens ein Audioempfänger 300 vorgesehen, welcher einen erfindungsgemäß modifizierten LTEkonformen Teilnehmer darstellt. Er ist über einen Uplink UL3 und einen Downlink DL3 mit der Basisstation 200 verbunden. Der Audioempfänger 300 enthält ebenfalls eine Mobilfunk-Sendeeinheit 310 mit einem Codierer und eine Mobilfunk-Empfangseinheit 320 mit einem erfindungsgemäß modifizierten Decoder. Das Terminal 100 kann Audiodaten und andere Daten drahtlos übertragen, wobei diese Übertragung in beiden Fällen konform zur Wellenform eines LTE-Systems erfolgt. Das Audioübertragungssystem ist LTE-konform insofern, als die vom Terminal 100 erzeugten Signale für alle Netzkomponenten so erscheinen, als seien das Terminal 100, die Basisstation 200 und der Audioempfänger 300 ganz normale LTE-Netzteilnehmer, da alle Parameter der Modulation auf Symbolebene identisch mit den üblicherweise benutzten Parametern sind. Tatsächlich können sich das Terminal 100, die Basisstation 200 und der Audioempfänger 300 in einer Betriebsart vollkommen LTE-konform verhalten, z.B. zur Übertragung von Steuerungs- und Kontrolldaten. Dazu werden im Terminal 100 eine erste Codiereinheit und im Audioempfänger 300 eine erste Decodiereinheit genutzt. Für die Übertragung von Audiodaten jedoch benutzen das Terminal 100 und der Audioempfänger 300 eine Betriebsart, in der die Bits selbst, die in den Subframes versendet werden, anders als üblich codiert sind. Sie sind deshalb für andere LTE-konforme Netzteilnehmer (einschließlich der Basisstation 200) nicht decodierbar, da LTE-gemäße Fehlerprüfungen (CRC, Cyclic Redundancy Check, zyklische Redundanzprüfung) nicht erfolgreich sein werden. Die Mobilfunk-Sendeeinheiten 110, 310 und die Mobilfunk-Empfangseinheiten 120,320 können also einerseits zur Kommunikation mit der Basisstation 200 komplett LTE-konform arbeiten. Andererseits können aber die Mobilfunk-Sendeeinheit 110 und die Mobilfunk-Empfangseinheit 320 zur direkten Kommunikation untereinander einen modifizierten Code verwenden, der von der Basisstation 200 nicht decodiert werden kann. In beiden Fällen werden die codierten Bits als LTE-wellenkonformes Signal übertragen.

Beide Netzwerk-Teilnehmer 100 und 300 können von der Basisstation 200 konfiguriert und synchronisiert werden. Die Basisstation 200 weist dem sendenden Terminal 100 genügend 1 ms-Subframes zu, sodass dieses die Audiodaten ohne Unterbrechung senden kann. Das bedeutet, dass dem Terminal 100 mindestens ein 1 ms-Subframe mit den entsprechenden Frequenzressourcen pro 1 ms, d.h. zu jeder Zeit, zur Verfügung steht, wie oben beschrieben.

In diesen zugewiesenen Zeitschlitzen erfolgt die Aussendung der codierten Audiodaten durch das Terminal 100. Diese Daten sehen für andere Netzteilnehmer wie ganz normale Datenpakete aus, da die Wellenform kompatibel ist. Die interne Datenstruktur, in der die eigentlichen Nutzdaten (auch als "Pay-Load" bezeichnet) mit Hilfe von fehlererkennenden und fehlerkorrigierenden Codes codiert wurden, entspricht jedoch nicht dem LTE-Standard. Die Basisstation 200 kann diese Datenpakete deshalb auch nicht decodieren. Es kann und sollte daher sichergestellt werden, dass sie keine nochmalige Sendung des Datenpakets ("Retransmission") von dem Terminal 100 anfordert und dem Terminal 100 dennoch weiterhin unterbrechungsfrei Subframes zur Verfügung stellt, in denen dieses senden kann.

Der erfindungsgemäße Audioempfänger 300 hört die per Uplink UL1 vom Terminal 100 gesendeten Daten mit. Die dazu benutzten Frequenzen und Zeitpunkte werden ja von der Basisstation 200 an die Teilnehmer gesendet, wobei normalerweise an jeden Teilnehmer nur die für ihn selbst geltenden Frequenzen und Zeitschlitze gesendet werden. Erfindungsgemäß werden aber auch dem Audioempfänger 300 die für den Uplink UL1 des Terminals 100 geltenden Frequenzen und Zeitschlitze mitgeteilt, so dass dieser die dort gesendeten Daten empfangen kann. Da er die nicht standardgemäße Codierung der Daten des Terminal-Uplinks UL1 kennt, kann er sie auch decodieren. Zudem kann er bereits früher (d.h. vor Ende eines Subframes) mit der Decodierung beginnen, da die Codierung derart erfolgt, dass bereits während des Subframes, d.h. vor dem kompletten Ablauf der 1 ms-Dauer, decodierbare Daten zur Verfügung stehen. Er kann somit früher als ein Standard-LTE-Gerät mit der Decodierung beginnen und die Audiodaten dem nachfolgenden externen Gerät (z.B, dem Mischpult) zur Verfügung stellen. Die Basisstation 200 merkt hiervon nichts; die übertragenden Daten werden somit sowohl von dem Audioempfänger 300 als auch von der Basisstation 200 empfangen. Die Basisstation 200 kann hierbei diese empfangenen Audiosignale, also die für sie nicht decodierbaren eigentlichen Nutzdaten, vollständig ignorieren. Damit erhält der Audioempfänger 300 seine zu verarbeitenden Audiodaten nicht von der Basisstation 200, sondern direkt von dem Terminal 100.

Das zwischen dem Terminal 100 und dem Audioempfänger 300 benutzte Datenformat muss auf Bitebene nicht dem Mobilfunk-Standard, z.B. LTE, entsprechen, da es von der Basisstation 200 nicht ausgewertet werden muss. Hierin liegt ein Vorteil der Erfindung. Da mittels derselben Modulation die Datenpakete in eine zum jeweiligen Mobilfunkstandard kompatible Wellenform einpasst werden, kann diese Art der Übertragung akustischer Daten in normalen Mobilfunk-Netzen benutzt werden. Das Datenformat innerhalb dieser Bedingung ist allerdings frei definierbar, so dass man die relativ langen Latenzzeiten im Mobilfunk-Netz reduzieren kann.

Die erfindungsgemäße Verbindung zwischen einem Terminal und einem Empfänger kann in einem Aufbau wie in Fig. 1 die Mikrofon-Funkstrecke 15 oder die Rückkanal-Funkstrecke 55 oder beide Funkstrecken 15,55 ersetzen.

Wegen der geringeren Datenmenge braucht man im Fall von LTE weder die 1,5 ms (T1) zur Aufbereitung der Daten noch die 1,5 ms (T2) zur Decodierung der Daten in derselben Länge auszunutzen, sondern kann hierfür kürzere Zeitabschnitte verwenden. Zudem kann man mit der Aussendung der Nutzdaten bereits beginnen, bevor alle Daten für den Subframe-Zeitschlitz vollständig berechnet sind. Wie oben beschrieben, ist dieser Subframe noch in mehrere kürzere Rahmen bzw. OFDM-Symbole unterteilt, z.B. enthält beim LTE-Netz der 1 ms (TS) Subframe 14 OFDM-Symbole. Da ein Teil davon (konventionell 50%) LTE Synchronisationsinformationen enthalten und damit nicht ohne weiteres nutzbar sind, kann man z.B. jeweils zwei OFDM-Symbole zusammenfassen und somit beispielsweise nach 1/7 ms bereits senden. Alternativ kann es auch möglich sein, einzelne OFDM-Symbole zu benutzen und zumindest zeitweise auf LTE-Synchronisationsinformation zu verzichten, weil auf Grund der Tatsache, dass das Terminal und der Audioempfänger mit derselben Basisstation kommunizieren, weniger Synchronisationsinformationen benötigt werden.

Die erfindungsgemäße Übertragung wird also an drei Stellen schneller: Die jeweils 1,5 ms zur Aufbereitung (T1) und die 1,5 ms zur Decodierung (T2) der Daten lassen sich entschieden verkürzen, und zusätzlich kann die Aussendung der Daten innerhalb des 1 ms-Zeitschlitzes (TS) deutlich früher (z.B. bereits nach 1/7 ms statt nach 1 ms) beginnen. Dies ergibt in Summe eine wesentlich kürzere Latenzzeit für die Übertragung der Audiodaten.

Somit wird es möglich, innerhalb bestehender Mobilfunk-Netze eine Übertragung von (z.B. akustischen) Daten vorzunehmen, die mit entschieden kürzerer Latenzzeit als die konventionelle Datenübertragung erfolgt, sodass diese Art der Übertragung auch latenzkritische Anwendungen zulässt. Günstigstenfalls erreicht man somit im Fall von LTE statt der 4 ms Latenzzeit eine Verbesserung um den Faktor 7, d.h. pro Funkstrecke werden lediglich 4/7 ms (<0,572 ms) benötigt.

Die Kommunikation im Mobilfunk-Netz zwischen dem Terminal 100 und der Basisstation 200 beziehungsweise zwischen dem Audioempfänger 300 und der Basisstation 200 erfolgt also, bis auf die Codierung zumindest eines Teils der Nutzdaten, konform zu allen Protokollen des Netzes. Somit können Terminal 100 und Audioempfänger 300 auch Kontrolldaten über die Basisstation 200 austauschen.

Die Übertragung der latenzkritischen Audiosignale erfolgt konform zur Wellenform des Mobilfunk-Netzes. Die gesendeten Symbole erzeugen also keine Störungen für andere Teilnehmer im Netz. Die blockweise Decodierung der in einem erfindungsgemäß modifizierten Subframe empfangenen Bits ist durch die Basisstation 200 jedoch nicht möglich.

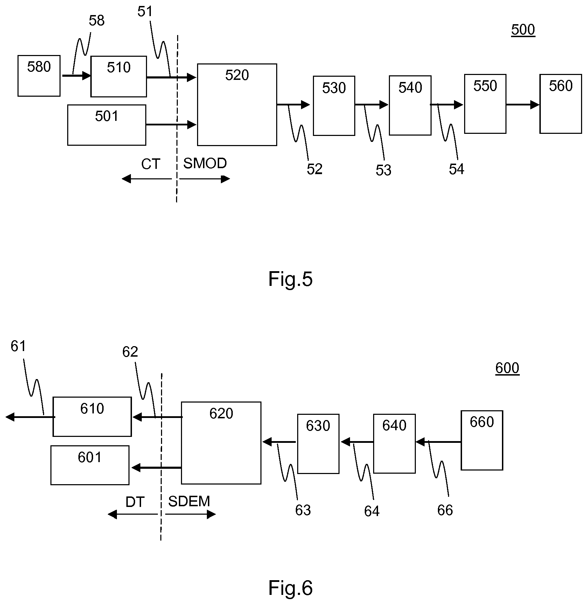

Fig. 5 zeigt exemplarisch die Struktur einer LTE-Einheit 500 auf der Sendeseite, z.B. entsprechend der Mobilfunk-Sendeeinheit 110 in dem Terminal 100, Die LTE-Einheit 500 enthält eine Codierungs- und Terminierungseinheit CT sowie eine standardkonforme LTE-Modulationseinheit SMOD. Die Codierungs- und Terminierungseinheit CT enthält eine erste Codiereinheit 501 und eine zweite Codiereinheit 510. Die erste Codiereinheit 501 führt eine Codierung und Terminierung gemäß dem LTE-Standard durch, z.B. für die Übertragung von Kontrolldaten. Die zweite Codiereinheit 510 bekommt die zu übertragenen Audiodaten 58 (z.B. von einer Mikrofoneinheit 580) und erzeugt die erfindungsgemäß codierten Bits 51. Dazu enthält sie einen Codierer, wie z.B. einen Faltungscoder oder einen Turbocoder. Außerdem kann sie andere Module enthalten, wie z.B. Inter-leaver, Punktierer, Scrambler, CRC-Prüfsummengenerator etc. In der Codierungs- und Terminierungseinheit CT werden die Audiodatenbits codiert und terminiert. Anschließend werden die codierten und terminierten Audiodatenbits 51 an die LTE-Modulatoreinheit SMOD weitergegeben, die daraus ein zum LTE-Standard wellenformkompatibles Signal erzeugt. Alternativ kann die LTE-Modulatoreinheit SMOD auch aus den von der Codiereinheit 501 erhaltenen Daten ein zum LTE-Standard wellenformkompatibles Signal erzeugen. Die LTE-Modulatoreinheit SMOD ist im Wesentlichen konventionell und enthält in diesem Beispiel einen Modulator 520, z.B. für QPSK oder QAM, der komplexe Symbole 52 erzeugt, eine Mappingeinheit 530, die die komplexen Symbole 52 LTE-konform den PRBs zuweist und die ein Signal 53 im Frequenzbereich erzeugt, und eine IFFT-Einheit 540 zur Durchführung einer inversen Schnellen Fouriertransformation, die wieder ein Signal 54 im Zeitbereich erzeugt. Dieses wird in einer Präfixeinheit 550 um ein Präfix (CP, cyclic prefix) ergänzt und schließlich in einer Hochfrequenz-(HF)sendeeinheit 560 in ein HF-Sendesignal umgewandelt, bevor dieses über den Uplink gesendet wird.

Zurück zu Fig. 4, kann zwischen der Basisstation 200 und dem Terminal 100 zusätzlich auch ein LTE-konformer Kontrollkanal vorhanden sein, der andere als die vom Audiosignal belegten PRBs nutzt und über welchen z.B. übertragen werden kann, welche Funkressourcen das Terminal 100 für die Uplink-Kommunikation UL1 von dem Terminal 100 an die Basisstation 200 verwenden soll. Dabei können vom Audiosignal belegte PRBs und von anderen Signalen belegte PRBs gleichzeitig erzeugt und gleichzeitig in verschiedenen Frequenzbändern übertragen werden. Die Basisstation 200 weist die Funkressourcen in einer Ausführungsform so zu, dass das Terminal 100 kontinuierlich einen (Audio-) Datenstrom per Uplink UL1 übertragen kann, Ferner werden in einer Ausführungsform die Funkressourcen so eingeteilt, dass diese persistent zugewiesen sind. In einer Ausführungsform kann zumindest für die Dauer der Verbindung immer dieselbe Frequenz (z.B. derselbe OFDM-Unterträger) verwendet werden. Der Empfänger 300 kann daher in diesem Fall auf die im LTE-Funknetz übliche kontinuierliche Kanalabschätzung verzichten und gewinnt damit Zeit für die Übertragung von Daten, Die Bandbreite der Funkressourcen wird an die benötigte Datenrate des Terminals 100 angepasst, so dass eine sichere Übertragung vorgesehen werden kann, ohne dass wiederholte Übertragungen (Retransmissions) benötigt werden.

Eine auf der Empfängerseite 300 verwendete Mobilfunk-Empfangseinheit 320, z.B. eine in Fig. 6 dargestellte LTE-Einheit 600, hat eine der in Fig.5 dargestellten LTE-Einheit 500 vergleichbare Struktur. Sie umfasst eine zum Standard-LTE wellenformkompatible LTE-Demodulatoreinheit SDEM und eine Decodier- und Terminierungseinheit DT. In der LTE-Demodulatoreinheit empfängt eine HF-Empfangseinheit 660 ein Signal und synchronisiert es, eine FFT-Einheit 640 erzeugt aus dem synchronisierten Zeitbereichssignal 66 ein Frequenzbereichssignal 64, und eine Extraktionseinheit 630 wählt aus dem Frequenzbereichssignal 64 bestimmte PRBs aus und extrahiert daraus komplexe Symbole 63, die dann in einem Demodulator 620 demoduliert werden, z.B. mit QPSK oder QAM. Die Decodier- und Terminierungseinheit DT enthält zusätzlich zu einer ersten konventionellen Decodiereinheit 601 eine zweite Decodiereinheit 610, z.B. Faltungsdecoder oder Turbo-Decoder, der aus dem demodulierten Signal 62 die Audiodatenbits 61 zurückgewinnt. Zusätzlich kann die zweite Decodiereinheit 610 weitere Module enthalten, wie z.B. De-Interleaver, De-Scrambler, CRC-Prüfmodul etc. Dabei muss die zweite Decodiereinheit 610 nicht bis zum Ende des Subframes warten, wie die erste konventionelle Decodiereinheit 601, sondern kann schon nach wenigen empfangenen OFDM-Symbolen mit der Decodierung beginnen und decodierte Audiodaten 61 ausgeben, nämlich sobald die in den Symbolen enthaltenen Daten terminiert sind. Das heißt, dass das Decodieren derjenigen empfangenen und demodulierten Audiodaten 62, die gemäß dem zweiten Format in den kürzeren zweiten Datenrahmen codiert sind, nur durch andere Audiodaten desselben zweiten Datenrahmens, aber nicht durch Audiodaten eines anderen zweiten Datenrahmens beeinflusst wird, wie oben beschrieben. Daher kann direkt nach dem Empfang bzw. der Demodulation des zweiten Datenrahmens dessen Decodierung zu Audiodaten erfolgen. Außerdem kann z.B. eine in der Bitsequenz bzw. den Audiodaten enthaltene CRC-Prüfsumme kontrolliert werden. Dann wird die Bitsequenz an die nächste Verarbeitungsstufe weitergegeben.

Wie aus der Beschreibung oben hervorgeht, unterscheiden sich die Komponenten des Audioübertragungssystems von üblichen, konventionellen Netzwerkkomponenten folgendermaßen. Das Terminal 100 kann sich wie ein normaler Netzwerkteilnehmer verhalten, außer dass es zusätzlich eine zweite Codiereinheit 510 bzw. in einer zweiten Betriebsart seiner Mobilfunk-Sendeeinheit eine Codierung benutzt, bei der zu übertragende Daten schon nach kürzerer Zeit terminiert werden als üblich. Die Basisstation 200 kann sich wie eine normale Basisstation verhalten, außer dass sie im Fall von Payload-Daten, die sie über den Uplink UL1 des Terminals 100 empfängt und die für sie nicht decodierbar sind, keine erneute Übertragung anfordern sollte. Außerdem kann die Basisstation 200 in einer Ausführungsform dem Audioempfänger 300 Konfigurationsdaten des Terminal-Uplinks UL1 bereitstellen, damit der Audioempfänger die Daten direkt vom Terminal empfangen kann. Der Audioempfänger 300 kann sich ebenfalls wie ein normaler Netzwerkteilnehmer verhalten, außer dass er zusätzlich Zugriffsdaten für den Terminal-Uplink UL1 erhalten, sich auf diesen Terminal-Uplink UL1 einstellen und Daten direkt von diesem empfangen kann. Außerdem kann eine zweite Decodiereinheit in der Mobilfunk-Empfangseinheit 320 des Audioempfängers 300 die vom zweiten Codierer in der Mobilfunk-Sendeeinheit 110 des Terminals benutzte Codierung decodieren, wobei insbesondere weniger Daten terminiert werden als üblich. Zu diesem Zweck kann der Audioempfänger 300, z.B. in der Mobilfunk-Empfangseinheit 320, eine Prüfeinheit und/oder eine Konfigurationsdateneinheit enthalten, Die Prüfeinheit überprüft pro Gruppe von gemeinsam decodierten OFDM-Symbolen eine in den decodierten Daten enthaltene Prüfsumme (CRC). Die Konfigurationsdateneinheit kann erste und zweite Konfigurationsdaten speichern, wobei die ersten Konfigurationsdaten den Uplink UL3 und/oder Downlink DL3 des Audioempfängers 300 und die zweiten Konfigurationsdaten den Uplink UL1 des Terminals 100 spezifizieren.

Ein Codierer in der zweiten Codiereinheit 510 enthält mehrere Register als Verzögerungs- bzw. Speicherelemente. An seinem Eingang empfängt der Codierer eine zu codierende Bitsequenz, die die Register durchläuft. Daher hängen der Wert eines aktuell ausgegebenen Bits, und damit auch das daraus erzeugte OFDM-Symbol, von mehreren vorhergehenden Eingangsbits ab. Eine Terminierung der Daten kann erfolgen, indem die Auswirkung vorher empfangener Bits auf die Ausgangssignale beendet wird, Dies kann z.B. geschehen, indem der Codierer auf einen definierten Anfangszustand zurückgeführt wird, bei dem seine Register "leer" sind, also z.B. den Wert Null ("0") enthalten. Zum Beispiel können die Daten terminiert werden, indem an die Eingangssequenz genügend Null-Bits "0" angehängt werden. Wenn diese in den Codierer 510 eingelesen sind, haben nach einer gewissen Zeit alle seine Register den Wert Null und der Codierer ist in seinen Anfangszustand zurückgesetzt.

Während eine Terminierung der auf OFDM-Symbole verteilten Bits standardgemäß in LTE nur einmal pro Subframe erfolgt, also nach 1 ms bzw. vierzehn OFDM-Symbolen, erfolgt erfindungsgemäß die Terminierung der Daten bereits nach weniger als vierzehn OFDM-Symbolen, z.B. nach sieben OFDM-Symbolen. In dem Fall kann die in dem OFDM-Symbol enthaltene Bitsequenz schon nach einem Bruchteil des Subframes und daher mit deutlich geringerer Latenz weitergegeben werden. Eine weitere Reduzierung der Latenz ist bei einer Terminierung schon nach zwei OFDM-Symbolen möglich. In einer Ausführungsform der Erfindung erfolgt die Terminierung bereits nach jedem einzelnen OFDM-Symbol, so dass die in dem OFDM-Symbol enthaltene Bitsequenz mit minimaler Latenz weitergegeben werden kann.

Die Funkressourcen des Übertragungssystems befinden sich vorzugsweise in einem IMT Band (IMT = International Mobile Telecommunications) oder in einem Band, welches für die lizenzierte Nutzung von IMT Technik vorgesehen ist.

Vorzugsweise ist das Terminal 100 dazu in der Lage, in verschiedenen IMT Bändern betrieben zu werden. Das Terminal 100 ist ferner dazu ausgestaltet, die Standardprotokolle des jeweiligen Mobilfunk-Standards zum Linkaufbau und zur Ressourcensteuerung zu unterstützen. In dem Uplink UL1 verwendet das Terminal die von der Basisstation zugewiesenen Funkressourcen gemäß den Regeln der Wellenformung in der Uplinkstrecke, nämlich im Beispiel von LTE: Encoding→Punktierung→Modulation→DFT→Mapping auf PRBs→IFFT→Guard Interval.

Zusätzlich hierzu erfolgen einige Abwandlungen. Der Code wird in einer Ausführungsform für jedes OFDM-Symbol abgeschlossen. In einer anderen Ausführungsform wird der Code für jedes Paar aus zwei OFDM-Symbolen abgeschlossen. Daher kann jedes Symbol bzw. jedes Symbolpaar unmittelbar nach dem Empfang decodiert werden, ohne auf das Ende des Subframes warten zu müssen. Im Code des OFDM-Symbols kann eine CRC-Checksumme über das Symbol zur Fehlerprüfung enthalten sein. Ein zusätzlicher CRC über den Subframe kann danach übertragen werden, wie in LTE üblich.

Gemäß der Erfindung wird insbesondere in einer der höheren Protokollschichten vorgesehen, dass es in diesem Fall nicht zu einer Beendigung der Verbindung seitens der Basisstation kommt. Ebenfalls in einer der höheren Protokollschichten kann vorgesehen werden, dass dem Empfänger Daten über den Uplink UL1 des Terminals mitgeteilt werden, damit dieser Zugriff auf die Daten des Uplink hat. Alternativ kann der Empfänger diese Information auch anders erhalten, z.B. direkt vom Terminal.

Allgemein betrifft die Erfindung in einer Ausführungsform ein Verfahren zur latenzarmen Übertragung von Audiodaten in einem Mobilfunk-Netzwerk, das mindestens ein Terminal 100, eine Basisstation 200 und einen Audioempfänger 300 aufweist. Das Verfahren umfasst mindestens die Schritte: Senden von Daten von dem mindestens einen Terminal 100 an die Basisstation 200, wobei die Daten gemäß einem ersten Format codiert und die codierten Daten gemäß einem ersten Hochfrequenz-Modulationsverfahren moduliert und über einen Uplink UL1 gesendet werden, Senden von Audiodaten von dem mindestens einen Terminal 100, wobei die Audiodaten gemäß einem zweiten Format codiert und die codierten Audiodaten gemäß dem ersten Hochfrequenz-Modulationsverfahren moduliert und über den Uplink UL1 gesendet werden, wobei das Senden der Audiodaten von dem Terminal 100 zu dem Audioempfänger 300 in einer zu dem Mobilfunk-Netzwerk konformen Wellenform erfolgt, und direktes Empfangen der über den Uplink UL1 in den zweiten Datenrahmen LLF₀ gesendeten Audiodaten durch den Audioempfänger 300.

Dabei nutzt das erste Format erste Datenrahmen PRB1, und das Terminal 100 und die Basisstation 200 codieren und decodieren die Daten rahmenweise gemäß den ersten Datenrahmen, wobei das Codieren und Decodieren der Daten eines ersten Datenrahmens durch andere Daten desselben ersten Datenrahmens PRB1, aber nicht durch Daten anderer erster Datenrahmen PRB2 beeinflusst wird.

Außerdem sind gemäß dem zweiten Format die ersten Datenrahmen PRB1 in eine ganzzahlige Anzahl von zweiten Datenrahmen LLF₀ aufgeteilt, wobei die zweiten Datenrahmen kürzer als die ersten Datenrahmen sind und die gemäß dem zweiten Format codierten Audiodaten enthalten. Dabei wird das Codieren und Decodieren der Audiodaten eines zweiten Datenrahmens LLF₀ durch andere Audiodaten desselben zweiten Datenrahmens, aber nicht durch Audiodaten eines anderen zweiten Datenrahmens LLF₁ beeinflusst. Daher können im Audioempfänger 300 die Audiodaten aus jedem der zweiten Datenrahmen LLF₀ separat und sofort nach Empfang des jeweiligen zweiten Datenrahmens LLF₀ decodiert und verarbeiten werden.

In einer anderen Ausführungsform betrifft die Erfindung ein Drahtlos-Mikrofon, das zum Betrieb als mobiles Terminal 100 in einem Mobilfunk-Netzwerk konfiguriert ist, und das mindestens eine erste Codiereinheit 501, eine Hochfrequenz-Modulationseinheit SMOD, eine Mikrofoneinheit 580 und eine zweite Codiereinheit 510 enthält. Die erste Codiereinheit 501 codiert die von dem Terminal zu sendende Daten gemäß einem in dem Mobilfunk-Netzwerk benutzten ersten Format. Die Hochfrequenz-Modulationseinheit SMOD ist ausgestaltet zum Modulieren der gemäß dem ersten Format codierten Daten gemäß einem in dem Mobilfunk-Netzwerk benutzten Modulationsverfahren, wobei die modulierten Daten über einen Uplink UL1 gesendet werden.
Die Mikrofoneinheit 580 enthält eine Mikrofonkapsel und gibt von der Mikrofonkapsel aufgenommene Audiodaten 58 aus.

Die zweite Codiereinheit 510 erhält die Audiodaten 58 der Mikrofoneinheit 580 und codiert diese gemäß einem zweiten Format, wobei gemäß dem zweiten Format die ersten Datenrahmen PRB1 in eine ganzzahlige Anzahl von zweiten Datenrahmen LLF₀ aufgeteilt sind, und wobei die zweiten Datenrahmen kürzer als die ersten Datenrahmen sind und die gemäß dem zweiten Format codierten Audiodaten 51 enthalten.

Die Hochfrequenz-Modulationseinheit SMOD ist außerdem ausgestaltet zum Modulieren der gemäß dem zweiten Format codierten Audiodaten 51 gemäß dem in dem Mobilfunk-Netzwerk benutzten Modulationsverfahren, wobei auch die modulierten Audiodaten über den Uplink UL1 gesendet werden.

Dabei nutzt das erste Format erste Datenrahmen PRB1, und das Terminal 100 codiert und terminiert die Daten rahmenweise gemäß den ersten Datenrahmen, wobei das Codieren der Daten eines ersten Datenrahmens durch andere Daten desselben ersten Datenrahmens PRB1, aber nicht durch Daten anderer erster Datenrahmen PRB2 beeinflusst wird. Ebenso sind die zweiten Datenrahmen LLF₀ terminiert, d.h. das Codieren der Audiodaten eines zweiten Datenrahmens LLF₀ wird durch andere Audiodaten desselben zweiten Datenrahmens, aber nicht durch Audiodaten eines anderen zweiten Datenrahmens LLF₁ beeinflusst.

In einer weiteren Ausführungsform betrifft die Erfindung einen Drahtlos-Empfänger 300, der zum Betrieb in einem Mobilfunk-Netzwerk konfiguriert ist, mit einer Hochfrequenz-Demodulationseinheit SDEM zum Demodulieren von empfangenen Daten gemäß einem in dem Mobilfunk-Netzwerk benutzten Demodulationsverfahren, wobei demodulierte Daten erhalten werden, die entweder gemäß einem in dem Mobilfunk-Netzwerk benutzten ersten Format oder gemäß einem anderen zweiten Format codiert sind, weiterhin mit einer ersten Decodiereinheit 601, die diejenigen von der Hochfrequenz-Demodulationseinheit demodulierten Daten decodiert, die gemäß dem in dem Mobilfunk-Netzwerk benutzten ersten Format codiert sind, wobei das erste Format erste Datenrahmen PRB1 nutzt und die erste Decodiereinheit die Daten rahmenweise gemäß den ersten Datenrahmen decodiert, und einer zweiten Decodiereinheit 610, die diejenigen von der Hochfrequenz-Demodulationseinheit demodulierten Daten decodiert, die gemäß dem zweiten Format codiert sind, wobei gemäß dem zweiten Format die ersten Datenrahmen PRB1 in eine ganzzahlige Anzahl von zweiten Datenrahmen LLF₀ aufgeteilt sind, und wobei die zweiten Datenrahmen kürzer als die ersten Datenrahmen sind und gemäß dem zweiten Format codierte Audiodaten enthalten.

Dabei werden unabhängig vom Format dieselbe Modulation/Demodulation und derselbe Hochfrequenzbereich benutzt. Die Daten der ersten Datenrahmen sind terminiert, d.h. das Decodieren der Daten eines ersten Datenrahmens PRB1 wird durch andere Daten desselben ersten Datenrahmens, aber nicht durch Daten anderer erster Datenrahmen PRB2 beeinflusst. Auch die Audiodaten der zweiten Datenrahmen sind terminiert, d.h. das Decodieren der Audiodaten eines zweiten Datenrahmens LLF₀ wird durch andere Audiodaten desselben zweiten Datenrahmens, aber nicht durch Audiodaten eines anderen zweiten Datenrahmens LLF₁ beeinflusst. Daher kann die zweite Decodiereinheit jeden der zweiten Datenrahmen unmittelbar nach dessen Erhalt decodieren und die dabei erhaltenen Audiodaten ausgeben.

In einer weiteren Ausführungsform betrifft die Erfindung ein Audioübertragungssystem mit mindestens einem als Terminal arbeitenden Drahtlos-Mikrofon wie oben beschrieben, einer Basisstation und einem Audioempfänger wie oben beschrieben. Dabei kann das Terminal Daten über einen Uplink in einer mit dem Mobilfunk-Netzwerk kompatiblen Wellenform senden und nutzt die von der Basisstation zugewiesenen Frequenzen und Zeitschlitze zum Senden sowohl von gemäß dem ersten Format codierten ersten Rahmen als auch von gemäß dem zweiten Format codierten zweiten Rahmen.

Eine Leistungssteuerung des Uplinks UL1, z.B. die Sendestärke des Terminals, erfolgt in einer Ausführungsform bevorzugt entsprechend der Vorgaben der Basisstation 200 oder entsprechend der Vorgaben des Audioempfängers 300.

Timing-Advance (TA) oder Laufzeitkorrektur ist ein Wert zur Synchronisation zwischen Uplink und Downlink, nämlich der Zeitversatz, um den das Terminal 100 früher senden muss, damit unter Berücksichtigung der Signallaufzeit das Signal im richtigen Zeitschlitz an der Basisstation 200 ankommt. Eine Steuerung der Laufzeitkorrektur in der Uplinkstrecke UL1 erfolgt normalerweise durch die Basisstation 200. Die Terminals, welche in dem System vorhanden sind und von dem Audioempfänger 300 gleichzeitig empfangen werden sollen, müssen daher mit ähnlichen Laufzeitkorrekturwerten TA senden, damit die Daten zum korrekten Zeitpunkt beim Audioempfänger 300 ankommen; der Audioempfänger 300 kann dabei in einer Ausführungsform nicht in die Laufzeitkorrektur eingreifen. Sofern sich die jeweiligen Terminals innerhalb von einem Umkreis von ca. 300 m befinden, sollte dies keine Probleme in der OFDM-Frequenzbereichsentzerrung hervorrufen. In einer anderen Ausführungsform kann jedoch auch der Audioempfänger 300 einen Einfluss auf die Steuerung der Laufzeitkorrektur in der Uplinkstrecke UL1 haben, damit unter Berücksichtigung der Signallaufzeit das Signal im richtigen Zeitschlitz am Audioempfänger 300 ankommt. Zu diesem Zweck kann der Audioempfänger 300 in dieser Ausführungsform die von der Basisstation für Terminals vorgegebene Laufzeitkorrektur entsprechend modifizieren. Bei dem erfindungsgemäßen System wird sich das Terminal 100 auf Grund einer speziellen Benutzungsform normalerweise viel dichter am Empfänger 300 als an der Basisstation 200 befinden. Oft befinden sich das als Terminal wirkende Mikrofon und der Audioempfänger z.B. im selben Raum. Da die Laufzeitkorrektur sich auf die Basisstation 200 bezieht und diese sowieso nicht in der Lage sein muss, das erfindungsgemäß codierte Audiosignal zu empfangen, kann zumindest für die codierten Audiosignale auf die Laufzeitkorrektur verzichtet werden. Ebenso kann in diesem Fall die Signalstärke des Sendesignals im Uplink UL1 des Terminals so weit reduziert werden, dass das Signal nicht notwendigerweise die Basisstation 200 erreicht, solange es den Audioempfänger 300 erreicht.

Gemäß einem Aspekt der vorliegenden Erfindung kann optional ein Feedbackkanal von dem Empfänger 300 an das zumindest eine Terminal 100 über den Uplink UL3 des Empfängers an die Basisstation 200 und den Downlink DL1 von der Basisstation 200 an das Terminal 100 erfolgen. Die hierbei zu übertragenden Steuerungsinformationen können in einer höheren Protokollschicht übertragen werden.

In einer Ausführungsform der Erfindung erfolgt eine Terminierung der codierten und gemäß LTE modulierten Audiodaten schon nach einem oder zwei OFDM-Symbolen. Damit kann auch eine Decodierung der Audiodaten schon nach einem oder zwei OFDM-Symbolen erfolgen, was die Übertragungslatenz gegenüber Standard-LTE reduziert.

Eine Retransmission durch die Basisstation 200 kann verhindert werden, z.B. indem auf ISO/OSI Layer 4 UDP (User Datagram Protocol) verwendet wird und auf ISO/OSI Layer 2 der H-ARQ (Hybrid-Automated Repeat Request) ausgeschaltet wird.

Durch das erfindungsgemäße Übertragungsverfahren können Hardware- und Signalverarbeitungskomponenten verwendet werden, die konform zu einem Mobilfunkstandard wie z.B. LTE sind.

Gemäß einem Aspekt der vorliegenden Erfindung kann eine Basisstation 200 in der Nähe des Audioempfängers 300 aufgestellt werden, insbesondere wenn es sich hierbei um eine Femto-Basisstation mit geringer Reichweite handelt.

Gemäß einem Aspekt der vorliegenden Erfindung kann auf den Fall eingegangen werden, dass sich der Ort, an dem die drahtlose Übertragung stattfinden soll, am Rand der Funkzelle der Basisstation befindet. Um diese Problematik zu umgehen, kann die Basisstation beispielsweise als zusätzliche Femto-Basisstation ausgestaltet sein, die sich in räumlicher Nähe zum geplanten Ereignis befindet.

Die Erfindung kann für drahtlose Mikrofonsysteme verwendet werden, die z.B. in der Bühnentechnik, für ENG (Electronic-News-Gathering) und bei PMSE-Übertragungen ("Programme Making and Special Events"), also typischerweise bei Reportage-Einsätze von Nachrichten-Fernsehteams eingesetzt werden.

Außerdem kann die Erfindung auch in Funknetzen anderer (Mobilfunk-) Standards verwendet werden. Da die Audiodaten mit einem zum jeweiligen Standard alternativen Codierverfahren, aber konform zur jeweils verwendeten Wellenform übertragen werden können, lassen sich die Audiodaten störungsfrei mit verringerter Latenz übertragen, ohne dass das alternative Codierverfahren ausdrücklich in dem jeweiligen Standard zugelassen sein muss. Weiterhin ist die Erfindung prinzipiell auch für andere latenzkritische Daten anwendbar, die nicht notwendigerweise Audiodaten sein müssen.

## Patentansprüche

1. Verfahren zur latenzarmen Übertragung von Audiodaten in einem Mobilfunk-Netzwerk, das mindestens ein Terminal (100), eine Basisstation (200) und einen Audioempfänger (300) aufweist, mit den Schritten:
Senden von Daten von dem mindestens einen Terminal (100) an die Basisstation (200), wobei die Daten gemäß einem ersten Format codiert und die codierten Daten gemäß einem ersten Hochfrequenz-Modulationsverfahren moduliert und über einen Uplink (UL1) gesendet werden,
wobei das erste Format erste Datenrahmen (PRB1) nutzt, und das Terminal (100) und die Basisstation (200) die Daten rahmenweise gemäß den ersten Datenrahmen codieren und decodieren,
wobei das Codieren und Decodieren der Daten jedes der ersten Datenrahmen durch Daten desselben ersten Datenrahmens (PRB1), aber nicht durch Daten anderer erster Datenrahmen (PRB2) beeinflusst wird;
Senden von Audiodaten von dem mindestens einen Terminal (100), wobei die Audiodaten gemäß einem zweiten Format codiert und die codierten Audiodaten gemäß dem ersten Hochfrequenz-Modulationsverfahren moduliert und über den Uplink (UL1) gesendet werden,
wobei gemäß dem zweiten Format die ersten Datenrahmen (PRB1) in eine ganzzahlige Anzahl von zweiten Datenrahmen (LLF₀,...,LLF_{N}) aufgeteilt sind, und wobei die zweiten Datenrahmen kürzer als die ersten Datenrahmen sind und die gemäß dem zweiten Format codierten Audiodaten enthalten,
und wobei das Codieren und Decodieren der Audiodaten jedes der zweiten Datenrahmen (LLF₀) durch Audiodaten desselben zweiten Datenrahmens, aber nicht durch Audiodaten eines anderen zweiten Datenrahmens (LLF₁) beeinflusst wird,
direktes Empfangen der über den Uplink (UL1) in den zweiten Datenrahmen (LLF₀) gesendeten Audiodaten durch den Audioempfänger (300),
wobei das Senden der Audiodaten von dem Terminal (100) zu dem Audioempfänger (300) in einer zu dem Mobilfunk-Netzwerk konformen Wellenform erfolgt, und
wobei im Audioempfänger (300) die Audiodaten aus jedem der zweiten Datenrahmen (LLF₀) separat und sofort nach Empfang des jeweiligen zweiten Datenrahmens (LLF₀) decodiert und verarbeiten werden können.

2. Verfahren nach Anspruch 1,
wobei das erste Hochfrequenz-Modulationsverfahren jeden der zweiten Datenrahmen (LLF₀) in höchstens zwei OFDM-Symbole umwandelt und der Decoder (320) aus den höchstens zwei zu einem zweiten Datenrahmen gehörenden OFDM-Symbolen direkt nach deren Empfang Audiodaten decodiert.

3. Verfahren nach Anspruch 1 oder 2,
wobei in jedem der zweiten Datenrahmen (LLF₀) eine Prüfsumme übertragen wird.

4. Verfahren nach einem der Ansprüche 1-3 mit dem zusätzlichen anfänglichen Schritt:
Konfigurieren des Audioempfängers (300) mit Daten, die den Uplink (UL1) des Terminals (100) spezifizieren so, dass der Audioempfänger auf den Uplink (UL1) zugreifen kann.

5. Verfahren nach Anspruch 4,
wobei die Basisstation (200) den Audioempfänger (300) mit den Daten konfiguriert, die den Uplink (UL1) des Terminals spezifizieren.

6. Verfahren nach einem der Ansprüche 1-5,
wobei der Audioempfänger (300) auch Daten über einen Downlink (DL3) von der Basisstation (200) empfangen kann und Daten über einen Uplink (UL3) an die Basisstation (200) senden kann, wobei die empfangenen und/oder gesendeten Daten mindestens Kontrolldaten umfassen.

7. Verfahren nach einem der Ansprüche 1-6,
wobei die Basisstation (200) dem Terminal (100) eine kontinuierliche Folge von ersten Datenrahmen (PRB1) als Funkressourcen zuweist und das Terminal (100) in jedem der zugewiesenen ersten Datenrahmen (PRB1) mindestens einen zweiten Datenrahmen (LLF₀) senden kann.

8. Verfahren nach einem der Ansprüche 1-7,
wobei zur Übertragung der ersten Datenrahmen (PRB1) für verschiedene erste Datenrahmen mehrere verschiedene Frequenzbereiche (f₁,f₂) benutzt werden.

9. Verfahren nach Anspruch 8,
wobei das Terminal (100) mehrere zweite Datenrahmen in jedem ersten Datenrahmen (PRB1) überträgt, und wobei das Terminal (100) zu jeder Zeit mindestens zwei erste Datenrahmen gleichzeitig in verschiedenen ihm zugeordneten Frequenzbereichen (f₁,f₂) überträgt.

10. Verfahren nach einem der Ansprüche 1-9,
wobei die Basisstation (200) die vom Terminal (100) über den Uplink (UL1) gesendeten Datenrahmen mit den gemäß dem zweiten Format codierten Audiodaten verwirft.

11. Drahtlos-Mikrofon oder Drahtlos-Taschensender, das oder der zum Betrieb als mobiles Terminal (100) in einem Mobilfunk-Netzwerk konfiguriert ist, mit
einer ersten Codiereinheit (501), die von dem Terminal zu sendende Daten gemäß einem in dem Mobilfunk-Netzwerk benutzten ersten Format codiert,
wobei das erste Format erste Datenrahmen (PRB1) nutzt und das Terminal (100) die Daten rahmenweise gemäß den ersten Datenrahmen codiert, und wobei das Codieren der Daten eines ersten Datenrahmens durch Daten desselben ersten Datenrahmens (PRB1), aber nicht durch Daten anderer erster Datenrahmen (PRB2) beeinflusst wird;
einer Hochfrequenz-Modulationseinheit (SMOD) zum Modulieren der gemäß dem ersten Format codierten Daten gemäß einem in dem Mobilfunk-Netzwerk benutzten Modulationsverfahren, wobei die modulierten Daten über einen Uplink (UL1) gesendet werden;
einer zweiten Codiereinheit (510), die Audiodaten (58) von einer Mikrofoneinheit (580) erhält und gemäß einem zweiten Format codiert, wobei gemäß dem zweiten Format die ersten Datenrahmen (PRB1) in eine ganzzahlige Anzahl von zweiten Datenrahmen (LLF₀,...,LLF_{N}) aufgeteilt sind, und wobei die zweiten Datenrahmen kürzer als die ersten Datenrahmen sind und die gemäß dem zweiten Format codierten Audiodaten enthalten, und wobei das Codieren der Audiodaten jedes der zweiten Datenrahmen (LLF₀) durch Audiodaten desselben zweiten Datenrahmens, aber nicht durch Audiodaten eines anderen zweiten Datenrahmens (LLF₁) beeinflusst wird;
wobei die Hochfrequenz-Modulationseinheit (SMOD) ausgestaltet ist zum Modulieren der gemäß dem zweiten Format codierten Audiodaten (51) gemäß dem in dem Mobilfunk-Netzwerk benutzten Modulationsverfahren, wobei auch die modulierten Audiodaten über den Uplink (UL1) gesendet werden.

12. Drahtlos-Mikrofon oder Drahtlos-Taschensender nach Anspruch 11, weiterhin mit
einer Mikrofoneinheit (580), die eine Mikrofonkapsel enthält und von der Mikrofonkapsel aufgenommene Audiodaten (58) ausgibt.

13. Drahtlos-Empfänger (300), der zum Betrieb in einem Mobilfunk-Netzwerk konfiguriert ist, mit
einer Hochfrequenz-Demodulationseinheit (SDEM) zum Demodulieren von empfangenen Daten gemäß einem in dem Mobilfunk-Netzwerk benutzten Demodulationsverfahren, wobei demodulierte Daten erhalten werden, die entweder gemäß einem in dem Mobilfunk-Netzwerk benutzten ersten Format oder gemäß einem anderen zweiten Format codiert sind, wobei unabhängig vom Format dieselbe Demodulation und derselbe Hochfrequenzbereich benutzt werden;
einer ersten Decodiereinheit (601), die diejenigen von der Hochfrequenz-Demodulationseinheit demodulierten Daten decodiert, die gemäß dem in dem Mobilfunk-Netzwerk benutzten ersten Format codiert sind,
wobei das erste Format erste Datenrahmen (PRB1) nutzt und die erste Decodiereinheit die Daten rahmenweise gemäß den ersten Datenrahmen decodiert, und wobei das Decodieren der Daten eines ersten Datenrahmens durch andere Daten desselben ersten Datenrahmens (PRB1), aber nicht durch Daten anderer erster Datenrahmen (PRB2) beeinflusst wird;
einer zweiten Decodiereinheit (610), die diejenigen von der Hochfrequenz-Demodulationseinheit demodulierten Daten decodiert, die gemäß dem zweiten Format codiert sind,
wobei gemäß dem zweiten Format die ersten Datenrahmen (PRB1) in eine ganzzahlige Anzahl von zweiten Datenrahmen (LLF₀) aufgeteilt sind, und wobei die zweiten Datenrahmen kürzer als die ersten Datenrahmen sind und gemäß dem zweiten Format codierte Audiodaten enthalten, und wobei das Decodieren der Audiodaten eines zweiten Datenrahmens (LLF₀) durch andere Audiodaten desselben zweiten Datenrahmens, aber nicht durch Audiodaten eines anderen zweiten Datenrahmens (LLF₁) beeinflusst wird, und
wobei die zweite Decodiereinheit jeden der zweiten Datenrahmen unmittelbar nach dessen Erhalt decodiert und die dabei erhaltenen Audiodaten ausgibt.

14. Drahtlos-Empfänger nach Anspruch 13,
wobei die Hochfrequenz-Demodulationseinheit (SDEM) die gemäß dem ersten Format codierten Daten aus einem Downlink (DL3) erhält und die gemäß dem zweiten Format codierten Daten aus einem Uplink (UL1) eines anderen Gerätes des Mobilfunk-Netzwerks.

15. Audioübertragungssystem mit
mindestens einem als Terminal (100) arbeitenden Drahtlos-Mikrofon oder Drahtlos-Taschensender nach Anspruch 11 oder 12, einer Basisstation (200), und einem Audioempfänger (300) nach Anspruch 13 oder 14,
wobei das Terminal (100) dazu ausgestaltet ist, Daten über einen Uplink (UL1) zu senden in einer Wellenform, die mit einer im Mobilfunk-Netzwerk benutzten Wellenform konform ist,
wobei die Basisstation (200) dem Terminal (100) Frequenzen und Zeitschlitze für das Senden der ersten Rahmen zuweist, und
wobei das Terminal (100) die zugewiesenen Frequenzen und Zeitschlitze zum Senden sowohl von gemäß dem ersten Format codierten ersten Rahmen als auch von gemäß dem zweiten Format codierten zweiten Rahmen nutzt.

16. Audioübertragungssystem nach Anspruch 15,
wobei der Audioempfänger (300) auch Daten über einen Uplink (UL3) an die Basisstation (200) senden kann, wobei die empfangenen und/oder gesendeten Daten mindestens Kontrolldaten umfassen.

17. Audioübertragungssystem nach einem der Ansprüche 15-16,
wobei der Audioempfänger (300) eine oder mehr Konfigurationsdateneinheiten enthält, die von der Basisstation (200) empfangene erste und zweite Konfigurationsdaten speichern können, wobei die ersten Konfigurationsdaten den Uplink (UL3) und/oder Downlink (DL3) des Audioempfängers (300) und die zweiten Konfigurationsdaten den Uplink (UL1) des Terminals (100) spezifizieren.

18. Audioübertragungssystem nach einem der Ansprüche 15-17,
wobei das Terminal (100) eine gegenüber einer Vorgabe der Basisstation (200) reduzierte Signalstärke des Sendesignals im Uplink (UL1) nutzt.

## Claims

1. A method of low-latency transmission of audio data in a mobile communications network, which has at least one terminal (100), a base station (200) and an audio receiver (300), comprising the steps:
transmitting data from the at least one terminal (100) to the base station (200), wherein the data are encoded in accordance with a first format and the encoded data are modulated in accordance with a first high-frequency modulation method and transmitted by way of an uplink (UL1),
wherein the first format uses first data frames (PRB1) and the terminal (100) and the base station (200) encode and decode the data frame-wise in accordance with the first data frames,
wherein encoding and decoding of the data of each of the first data frames is influenced by data of the same first data frame (PRB1) but not by data of other first data frames (PRB2),
transmitting audio data from the at least one terminal (100), wherein the audio data are encoded in accordance with a second format and the encoded audio data are modulated in accordance with the first high-frequency modulation method and transmitted by way of the uplink (UL1),
wherein in accordance with the second format the first data frames (PRB1) are divided into an integral number of second data frames (LLF₀,..., LLF_{N}) and wherein the second data frames are shorter than the first data frames and contain the audio data encoded in accordance with the second format,
and wherein encoding and decoding of the audio data of each of the second data frames (LLF₀) is influenced by audio data of the same second data frame but not by audio data of another second data frame (LLF₁),
directly receiving the audio data transmitted by way of the uplink (UL1) in the second data frames (LLF₀) by the audio receiver (300),
wherein transmission of the audio data from the terminal (100) to the audio receiver (300) is effected in a waveform conforming with the mobile communications network, and
wherein in the audio receiver (300) the audio data from each of the second data frames (LLF₀) can be decoded and processed separately and immediately after reception of the respective second data frame (LLF₀).

2. A method as set forth in claim 1
wherein the first high-frequency modulation method converts each of the second data frames (LLF₀) into at most two OFDM symbols and the decoder (320) decodes audio data from the at most two OFDM symbols belonging to a second data frame immediately after reception thereof.

3. A method as set forth in claim 1 or claim 2
wherein a checksum is transmitted in each of the second data frames (LLF₀).

4. A method as set forth in one of claims 1 through 3 with the additional initial step:
configuring the audio receiver (300) with data which specify the uplink (UL1) of the terminal (100) such that the audio receiver can access the uplink (UL1).

5. A method as set forth in claim 4
wherein the base station (200) configures the audio receiver (300) with the data which specify the uplink (UL1) of the terminal.

6. A method as set forth in one of claims 1 through 5
wherein the audio receiver (300) can also receive data from the base station (200) by way of a downlink (DL3) and can transmit data to the base station (200) by way of an uplink (UL3), wherein the received and/or transmitted data include at least check data.

7. A method as set forth in one of claims 1 through 6
wherein the base station (200) allocates to the terminal (100) a continuous succession of first data frames (PRB1) as radio resources and the terminal (100) can transmit at least one second data frame (LLF₀) in each of the allocated first data frames (PRB1).

8. A method as set forth in one of claims 1 through 7
wherein a plurality of different frequency ranges (f₁, f₂) are used for the transmission of the first data frames (PRB1) for various first data frames.

9. A method as set forth in claim 8
wherein the terminal (100) transmits a plurality of second data frames in each first data frame (PRB1) and wherein the terminal (100) at any time transmits at least two first data frames simultaneously in different frequency ranges (f₁, f₂) associated therewith.

10. A method as set forth in one of claims 1 through 9
wherein the base station (200) rejects the data frames transmitted from the terminal (100) by way of the uplink (UL1), with the audio data encoded in accordance with the second format.

11. A wireless microphone or wireless pocket transmitter which is configured for operation as a mobile terminal (100) in a mobile communications network, comprising
a first encoding unit (501) which encodes the data to be transmitted by the terminal in accordance with a first format used in the mobile communications network,
wherein the first format uses first data frames (PRB1) and the terminal (100) encodes the data frame-wise in accordance with the first data frames, and wherein encoding of the data of a first data frame is influenced by data of the same first data frame (PRB1) but not by data of other first data frames (PRB2),
a high-frequency modulation unit (SMOD) for modulation of the data encoded in accordance with the first format in accordance with a modulation method used in the mobile communications network, wherein the modulated data are transmitted by way of an uplink (UL1),
a second encoding unit (510) which obtains audio data (58) from a microphone unit (580) and encodes same in accordance with a second format, wherein in accordance with the second format the first data frames (PRB1) are divided into an integral number of second data frames (LLF₀,...,LLF_{N}), and wherein the second data frames are shorter than the first data frames and contain the audio data encoded in accordance with the second format and wherein encoding of the audio data of each of the second data frames (LLF₀) is influenced by audio data of the same second data frame but not by audio data of another second data frame (LLF₁),
wherein the high-frequency modulation unit (SMOD) is adapted to modulate the audio data (51) encoded in accordance with the second format in accordance with the modulation method used in the mobile communications network, wherein the modulated audio data are also transmitted by way of the uplink (UL1).

12. A wireless microphone or wireless pocket transmitter as set forth in claim 11 and further comprising
a microphone unit (580) which includes a microphone capsule and outputs audio data (58) recorded by the microphone capsule.

13. A wireless receiver (300) which is configured for operation in a mobile communications network, comprising
a high-frequency demodulation unit (SDEM) for demodulating received data in accordance with a demodulation method which is used in the mobile communications network, wherein demodulated data are obtained, which are encoded either in accordance with a first format used in the mobile communications network or in accordance with another second format, wherein the same demodulation and the same high-frequency range are used independently of the format,
a first decoding unit (601) which decodes those data demodulated by the high-frequency demodulation unit, that are encoded in accordance with the first format used in the mobile communications network,
wherein the first format uses first data frames (PRB1) and the first decoding unit decodes the data frame-wise in accordance with the first data frames, and wherein decoding of the data of a first data frame is influenced by other data of the same first data frame (PRB1) but not by data of other first data frames (PRB2),
a second decoding unit (610) which decodes those data which are demodulated by the high-frequency demodulation unit, that are encoded in accordance with the second format,
wherein in accordance with the second format the first data frames (PRB1) are divided into an integral number of second data frames (LLF₀) and wherein the second data frames are shorter than the first data frames and contain audio data encoded in accordance with the second format, and wherein decoding of the audio data of a second data frame (LLF₀) are influenced by other audio data of the same second data frame but not by audio data of another second data frame (LLF₁), and
wherein the second decoding unit decodes each of the second data frames immediately after they are obtained and outputs the audio data obtained in that case.

14. A wireless receiver as set forth in claim 13
wherein the high-frequency demodulation unit (SDEM) obtains the data encoded in accordance with the first format from a downlink (DL3) and the data encoded in accordance with the second format from an uplink (UL1) of another device of the mobile communications network.

15. An audio transmission system comprising
at least one wireless microphone or wireless pocket transmitter operating as a terminal (100) as set forth in claim 11 or claim 12, a base station (200) and an audio receiver (300) as set forth in claim 13 or claim 14,
wherein the terminal (100) is adapted to transmit data by way of an uplink (UL1) in a waveform which is in conformity with a waveform used in the mobile communications network,
wherein the base station (200) allocates to the terminal (100) frequencies and time slots for transmission of the first frames, and
wherein the terminal (100) uses the allocated frequencies and time slots for transmitting both first frames encoded in accordance with the first format and also second frames encoded in accordance with the second format.

16. An audio transmission system as set forth in claim 15 wherein the audio receiver (300) can also transmit data by way of an uplink (UL3) to the base station (200), wherein the received and/or transmitted data include at least check data.

17. An audio transmission system as set forth in one of claims 15 and 16
wherein the audio receiver (300) contains one or more configuration data units which can store first and second configuration data received by the base station (200), wherein the first configuration data specify the uplink (UL3) and/or downlink (DL3) of the audio receiver (300) and the second configuration data specify the uplink (UL1) of the terminal (100).

18. An audio transmission system as set forth in one of claims 15 through 17
wherein the terminal (100) uses a signal strength in respect of the transmission in the uplink (UL1), that is reduced in comparison with a provision of the base station (200).

## Revendications

1. Procédé de transmission à faible latence de données audio dans un réseau de radiocommunication mobile, qui comprend au moins un terminal (100), une station de base (200) et un récepteur audio (300), avec les étapes :
d'émission de données par l'au moins un terminal (100) à la station de base (200), dans lequel les données sont codées selon un premier format et les données codées sont modulées selon un premier procédé de modulation à haute fréquence et émises par le biais d'une liaison montante (UL1),
dans lequel le premier format utilise des premières trames de données (PRB1), et le terminal (100) et la station de base (200) codent et décodent les données trame par trame selon les premières trames de données,
dans lequel le codage et décodage des données de chacune des premières trames de données est influencé par des données de la même première trame de données (PRB1), mais pas par des données d'autres premières trames de données (PRB2) ;
d'émission de données audio par l'au moins un terminal (100), dans lequel les données audio sont codées selon un second format et les données audio codées sont modulées selon le premier procédé de modulation à haute fréquence et émises par le biais de la liaison montante (UL1),
dans lequel les premières trames de données (PRB1) sont réparties selon le second format en un nombre entier de secondes trames de données (LLF₀, ..., LLF_{N}), et dans lequel les secondes trames de données sont plus courtes que les premières trames de données et contiennent les données audio codées selon le second format,
et dans lequel le codage et décodage des données audio de chacune des secondes trames de données (LLF₀) est influencé par des données audio de la même seconde trame de données, mais pas par des données audio d'une autre seconde trame de données (LLF₁),
de réception directe des données audio émises par le biais de la liaison montante (UL1) dans les secondes trames de données (LLF₀) par le biais du récepteur audio (300),
dans lequel l'émission des données audio par le terminal (100) au récepteur audio (300) est effectuée dans une forme d'onde conforme au réseau de radiocommunication mobile, et
dans lequel, dans le récepteur audio (300), les données audio de chacune des secondes trames de données (LLF₀) peuvent être décodées et traitées séparément et immédiatement après la réception de la seconde trame de données concernée (LLF₀).

2. Procédé selon la revendication 1,
dans lequel le premier procédé de modulation à haute fréquence convertit chacune des secondes trames de données (LLF₀) dans au plus deux symboles OFDM et le décodeur (320) décode, à partir des au plus deux symboles OFDM appartenant à une seconde trame de données, des données audio directement après leur réception.

3. Procédé selon la revendication 1 ou 2,
dans lequel une somme de contrôle est transmise dans chacune des secondes trames de données (LLF₀).

4. Procédé selon l'une quelconque des revendications 1 à 3 avec l'étape initiale supplémentaire :
de configuration du récepteur audio (300) avec des données qui spécifient la liaison montante (UL1) du terminal (100) de sorte que le récepteur audio peut avoir accès à la liaison montante (UL1).

5. Procédé selon la revendication 4,
dans lequel la station de base (200) configure le récepteur audio (300) avec les données qui spécifient la liaison montante (UL1) du terminal.

6. Procédé selon l'une quelconque des revendications 1 à 5,
dans lequel le récepteur audio (300) peut également recevoir des données par le biais d'une liaison descendante (DL3) depuis la station de base (200) et peut émettre des données par le biais d'une liaison montante (UL3) à la station de base (200), dans lequel les données reçues et/ou émises comportent au moins des données de contrôle.

7. Procédé selon l'une quelconque des revendications 1 à 6,
dans lequel la station de base (200) attribue au terminal (100) une séquence continue de premières trames de données (PRB1) en tant que ressources radio et le terminal (100) peut émettre dans chacune des premières trames de données attribuées (PRB1) au moins une seconde trame de données (LLF₀).

8. Procédé selon l'une quelconque des revendications 1 à 7,
dans lequel, pour la transmission des premières trames de données (PRB1), plusieurs plages de fréquences différentes (f₁, f₂) sont employées pour différentes premières trames de données.

9. Procédé selon la revendication 8,
dans lequel le terminal (100) transmet plusieurs secondes trames de données dans chaque première trame de données (PRB1), et dans lequel le terminal (100) transmet à chaque instant au moins deux premières trames de données simultanément dans différentes plages de fréquences (f₁, f₂) qui lui sont affectées.

10. Procédé selon l'une quelconque des revendications 1 à 9,
dans lequel la station de base (200) rejette les trames de données, émises par le terminal (100) par le biais de la liaison montante (UL1), avec les données audio codées selon le second format.

11. Microphone sans fil ou émetteur de poche sans fil, qui est configuré pour le fonctionnement en tant que terminal mobile (100) dans un réseau de radiocommunication mobile, avec
une première unité de codage (501) qui code des données à émettre par le terminal selon un premier format utilisé dans le réseau de radiocommunication mobile,
dans lequel le premier format utilise des premières trames de données (PRB1) et le terminal (100) code les données trame par trame selon les premières trames de données, et dans lequel le codage des données d'une première trame de données est influencé par des données de la même première trame de données (PRB1), mais pas par des données d'autres premières trames de données (PRB2) ;
une unité de modulation à haute fréquence (SMOD) pour moduler les données, codées selon le premier format, selon un procédé de modulation employé dans le réseau de radiocommunication mobile, dans lequel les données modulées sont émises par le biais d'une liaison montante (UL1) ;
une seconde unité de codage (510) qui contient des données audio (58) d'une unité de microphone (580) et les code selon un second format, dans lequel les premières trames de données (PRB1) sont réparties selon le second format en un nombre entier de secondes trames de données (LLF₀, ..., LLF_{N}), et dans lequel les secondes trames de données sont plus courtes que les premières trames de données et contiennent les données audio codées selon le second format audio, et dans lequel le codage des données audio de chacune des secondes trames de données (LLF₀) est influencé par des données audio de la même seconde trame de données, mais pas par des données audio d'une autre seconde trame de données (LLF₁) ;
dans lequel l'unité de modulation à haute fréquence (SMOD) est conçue pour la modulation des données audio (51), codées selon le second format, selon le procédé de modulation employé dans le réseau de radiocommunication mobile, dans lequel les données audio modulées sont également émises par le biais de la liaison montante (UL1).

12. Microphone sans fil ou émetteur de poche sans fil selon la revendication 11, en outre avec une unité de microphone (580) qui contient une capsule de microphone et délivre en sortie des données audio (58) captées par la capsule de microphone.

13. Récepteur sans fil (300), qui est configuré pour fonctionner dans un réseau de radiocommunication mobile, avec
une unité de démodulation à haute fréquence (SDEM) pour la démodulation des données reçues selon un procédé de démodulation employé dans le réseau de radiocommunication mobile, dans lequel sont obtenues des données démodulées qui sont codées soit selon un premier format employé dans le réseau de radiocommunication mobile, soit selon un autre second format, dans lequel la même démodulation et la même plage de hautes fréquences sont employées indépendamment du format ;
une première unité de décodage (601) qui décode les données, démodulées par l'unité de démodulation à haute fréquence, qui sont codées selon le premier format employé dans le réseau de radiocommunication mobile,
dans lequel le premier format utilise des premières trames de données (PRB1) et la première unité de décodage décode les données trame par trame selon les premières trames de données, et dans lequel le décodage des données d'une première trame de données est influencé par d'autres données de la même première trame de données (PRB1), mais pas par des données d'autres premières trames de données (PRB2) ;
une seconde unité de décodage (610) qui décode les données, démodulées par l'unité de démodulation à haute fréquence, qui sont codées selon le second format,
dans lequel les premières trames de données (PRB1) sont réparties selon le second format en un nombre entier de secondes trames de données (LLF₀) et dans lequel les secondes trames de données sont plus courtes que les premières trames de données et contiennent des données audio codées selon le second format, et dans lequel le décodage des données audio d'une seconde trame de données (LLF₀) est influencé par d'autres données audio de la même seconde trame de données, mais pas par des données audio d'une autre seconde trame de données (LLF₁), et
dans lequel la seconde unité de décodage décode chacune des secondes trames de données immédiatement après son obtention et délivre les données audio obtenues à cette occasion.

14. Récepteur sans fil selon la revendication 13,
dans lequel l'unité de démodulation à haute fréquence (SDEM) obtient les données codées selon le premier format à partir d'une liaison descendante (DL3) et les données codées selon le second format à partir d'une liaison montante (UL1) d'un autre appareil du réseau de radiocommunication mobile.

15. Système de transmission audio avec
au moins un microphone sans fil ou un émetteur de poche sans fil fonctionnant en tant que terminal (100) selon la revendication 11 ou 12, une station de base (200) et un récepteur audio (300) selon la revendication 13 ou 14,
dans lequel le terminal (100) est conçu pour émettre des données par le biais d'une liaison montante (UL1) dans une forme d'onde qui est conforme à une forme d'onde employée dans le réseau de radiocommunication mobile,
dans lequel la station de base (200) attribue au terminal (100) des fréquences et des créneaux temporels pour l'émission de la première trame, et
dans lequel le terminal (100) utilise les fréquences et les créneaux temporels attribués pour l'émission aussi bien de premières trames codées selon le premier format que de secondes trames codées selon le second format.

16. Système de transmission audio selon la revendication 15,
dans lequel le récepteur audio (300) peut également émettre des données par le biais d'une liaison montante (UL3) à la station de base (200), dans lequel les données reçues et/ou émises comportent au moins des données de contrôle.

17. Système de transmission audio selon l'une quelconque des revendications 15 à 16,
dans lequel le récepteur audio (300) contient une ou plusieurs unités de données de configuration qui peuvent stocker les premières et secondes données de configuration reçues depuis la station de base (200), dans lequel les premières données de configuration spécifient la liaison montante (UL3) et/ou la liaison descendante (DL3) du récepteur audio (300) et les secondes données de configuration spécifient la liaison montante (UL1) du terminal (100).

18. Système de transmission audio selon l'une quelconque des revendications 15 à 17,
dans lequel le terminal (100) utilise une intensité de signal réduite par rapport à une consigne de la station de base (200) pour le signal d'émission dans la liaison montante (UL1).
